Europäisches Patentamt

(19) European Patent Office

Office européen des brevets

(11) Publication number: **0 054 024**
**B1**

(12) **EUROPEAN PATENT SPECIFICATION**

(45) Date of publication of patent specification: **03.04.85**

(51) Int. Cl.⁴: **H 04 B 1/66**

(21) Application number: **81900278.3**

(22) Date of filing: **18.06.80**

(86) International application number:
**PCT/US80/00754**

(87) International publication number:
**WO 81/03728 24.12.81 Gazette 81/30**

(54) **SUBSCRIBER LINE AUDIO PROCESSING CIRCUIT APPARATUS.**

(43) Date of publication of application:
**23.06.82 Bulletin 82/25**

(45) Publication of the grant of the patent:
**03.04.85 Bulletin 85/14**

(84) Designated Contracting States:
**DE GB NL SE**

(56) References cited:
**GB-A-2 022 367**
**GB-A-2 064 244**
**US-A-3 997 773**
**US-A-4 002 841**
**US-A-4 020 332**
**US-A-4 038 495**
**US-A-4 145 747**
**US-A-4 189 779**

**IEEE TRANS. ON AUDIO AND
ELECTROACOUSTICS, vol. AU-19, no. 3, Sept.
1971, (NEW YORK, N.Y.). L.R. RABINER et al,
"RECURSIVE AND NONRECURSIVE
REALIZATIONS OF DIGITAL FILTERS", see
pages 200-207**

(73) Proprietor: **TELEFONAKTIEBOLAGET L M
ERICSSON**
**S-126 25 Stockholm (SE)**

(72) Inventor: **APFEL, Russel Jay**
**7060 Anjou Creek Circle**
**San Jose, CA 94120 (US)**
Inventor: **MAGNUSSON, Bengt Gunnar**
**Lingonstigen 74**
**S-144 00 Roenninge (SE)**
Inventor: **ROOS, Sture Goesta**
**Box 9**
**S-760 10 Bergshamra (SE)**
Inventor: **SVENSSON, Lars Tommy Edward**
**Eksaetravaegen 28**
**S-127 33 Skaerholmen (SE)**

(74) Representative: **Wennerholm, Kristian et al**
**TELEFONAKTIEBOLAGET L M ERICSSON**
**S-126 25 Stockholm (SE)**

(56) References cited:
**CONFERENCE RECORD OF 1980,
INTERNATIONAL CONFERENCE ON
COMMUNICATIONS, vol. 2, June 8-12, 1980,
NEW YORK (US), L. VAN DE MEEBERG et al.:
"PCM codec with on-chip digital filters", pages
30.4.1-30.4.6**

Courier Press, Leamington Spa, England.

CONFERENCE RECORD OF 1979, INTERNATIONAL CONFERENCE ON COMMUNICATIONS, vol. 3, June 10-14, 1979, NEW YORK (US), M. BELLANGER: "Digital processing parameters in communication systems", pages 37.1.1-37.1.4

CONFERENCE RECORD OF 1980, INTERNATIONAL CONFERENCE ON COMMUNICATIONS, vol. 2, June 8-12, 1980, NEW YORK (US), T. MISAWA et al.: "A single-chip CODEC with filters-architecture", pages 30.5.1-30.5.6

## Description

Background of the invention
Field of the invention

The present invention relates generally to digital telecommunications systems apparatus and more particularly to a new subscriber line audio processing circuit wherein input voice signals in analog form are converted and processed in digital form prior to transmission, and conversely received signals are processed in digital form before being reconverted to analog form.

Description of the prior art

Prior art telecommunications apparatus for converting voice signals into digital format for transmission typically include a subscriber line interface circuit (SLIC) that provides a two-wire to four-wire conversion and line feeding operation using transformer coupled techniques plus additional circuitry to handle supervisory test and ringing functions, transmit and receive analog filters and a CODEC which does the actual conversion of the analog signals to digital PCM and the PCM signals back to analog signals. Integrated circuit manufacturers are presently attempting to replace these individual circuit components with integrated circuits which accomplish the various functions as they are presently performed; that is, a single channel monolithic CODEC replaces the CODEC function, single channel filters replace the filter function and a monolithic SLIC replaces the transformer and its associated hardware. Since prior art systems were based on a system architecture that was developed a number of years ago and took advantage of components available at that point in time, a simple replacement of components using LSI technology does not use such technology to its fullest advantage.

Prior art systems perform a number of functions which can be divided into three major catagories. (1) high voltage analog interfacing to subscriber line, (2) processing of the voice signal including two-wire to four-wire conversion filtering and coding, and (3) interface to the digital world including the PCM signal paths and control line from a processer or controller. In providing a new system, it is reasonable to partition the new system along these technologies. The analog interface to subscriber line requires both high current and high voltage devices and therefore is best implemented in a bipolar high voltage technology. High voltage bipolar technologies are not dense technologies and therefore this device should be kept as simple as possible. The signal processing and digital interface functions can both be implemented in low voltage technology. The low voltage technologies are high density LSI technologies with the optional choice for cost being n-channel MOS.

At present, signal processing is in the form of analog two-wire to four-wire conversion followed by analog filtering, analog sample-and-hold operations and analog-to-digital or digital-to-analog conversion. The companding functions are also done in the analog-to-digital and digital-to-analog converters in an analog manner. Since n-channel MOS is optimal for digital functions, it would appear practical to base a new system on digital signal processing. However, there has heretofore been a reluctance among the designers of such systems to use digital filters because such devices are complex structures requiring a great deal of hardware and dissipate a substantial amount of power.

In order to implement a digital filter structure, an analog-to-digital and digital-to-analog converter is required. However, in the subscriber line audio processing functions, analog-to-digital and digital-to-analog converters are required along with analog filters so no penalty is paid by having such converters. They are just placed in different parts of the system. Digital filters also require a reasonable amount of initial overhead at the outset. An arithmetic processing unit, read only memory (ROM) and random access memory (RAM) are all required to implement the filter. Therefore, a very simple filter requires nearly as much silicon hardware as a complex filter. Although filters required for the subscriber line functions are complex filters, the digital filter is cost effective when compared to the analog filter.

In comparing filter cost (based on silicon area) versus the complexity (or the degree of difficulty) and performance required from the filter, it has been noted that with analog types of filters the cost increases in a linear proportion to the complexity. However, in the case of digital filters, even though a high initial cost is paid, the cost of adding additional complexity is greatly reduced. One reason for this is that digital filters can multiplex and time share hardware where analog filters cannot. The digital filter also requires no precision components whereas the analog filter requires a large number of precision components (which may have to be trimmed and must have very low drift) in order to meet performance specifications. The digital filter can also be more accurate by just adding more bits in the computational path.

Another problem in using digital filters for such applications has been power dissipation due to the large amount of arithmetic processing. Typical digital filters require high speed multipliers which dissipate a great deal of the power. Telecommunications systems require very low power dissipation and analog filters have tended to be of lower power than digital filters. Consequently, prior art implementations have historically used analog filters rather than digital filters.

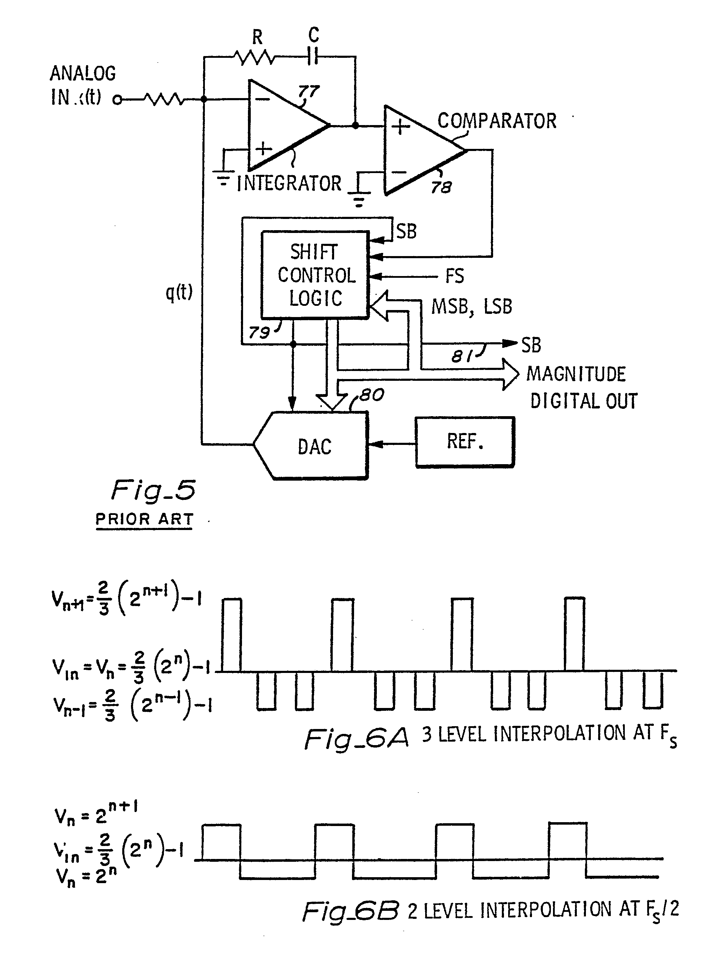

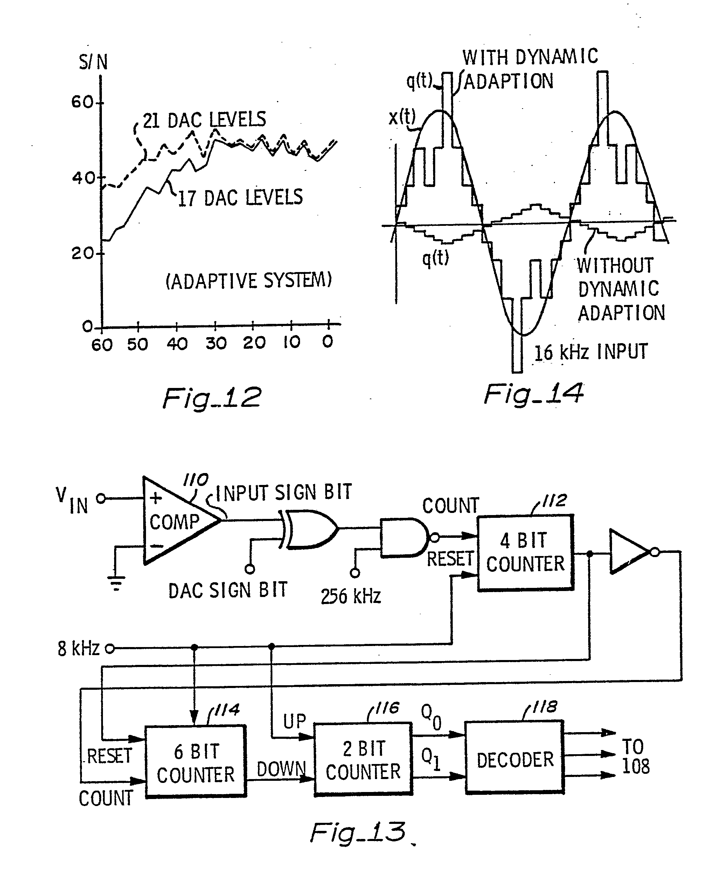

A Prior art system described in "ICC'80 Conference Record, Vol. 2, June 8—12, 1980 pages 30.4.1—30.4.6 relates to a PCM CODEC with on-chip digital filters for use in coding voice signals in telephony. The above mentioned reference shows in Figure 5 a block diagram of a PCM encoder and in Figure 11 a PCM decoder. The PCM encoder includes analog-to-digital converter means coupled to a subscriber line (voice signal) for sampling an input audio signal at a first sampling frequency, 256 kHz, and for developing a series of digital words representing the amplitude of each sample. The PCM encoder furthermore includes first signal processing means, a decimating digital filter, for digitally filtering said series of digital words and for developing a first digitally processed signal having a second sampling frequency, 8 kHz, and transmission means, compressor and output buffer, for transmitting said first digitally processed signal to an external transmission line (PCM).

Similarly, the decoder comprises receiver means, input buffer, for receiving a digital response signal at said second sampling frequency, second signal processing means, expanding and interpolating digital filter, coupled to said receiver means for filtering said response signal and for developing a second digitally processed signal having a third frequency, 32 kHz; and digital-to-analog converter means, a PCM coder, 7-Bits DAC, analog post filter, for converting said second processed signal to analog form suitable for output to said subscriber line (voice signal).

In Figure 4 of the above cited Conference Record, the decimating digital filter is shown in the encoder diagram and it appears that a coefficient FIR-filter with the length of 320 is used for reducing the incoming sampling frequency of 256 kHz to an outgoing signal with the sampling frequency of 8 kHz.

In Figure 11 of the Record, the interpolating digital filter uses a length of 40 coefficients followed by a second order analogue post filter after the PCM coder and the seven bit DAC.

In a prior art PCM-CODEC described in "ICC'80 Conference Record" Vol. 2 of 3 June 8—11, 1980 pages 30.5.1—30.5.6 it is furthermore known to carry out a two step decimation process of an incoming deltamodulated signal by providing two digital transversal filters in the CODEC, reducing a first frequency (of 2.048 MHz) to a second frqeuency (of 16 kHz) in two steps.

Summary of the present invention

In the subscriber line audio-processing circuit apparatus of the present invention, reducing the sampling frequency and increasing the sampling frequency of the processed digital signals in the receiver and in the transmitter paths, respectively are accomplished in another and less complex manner than in the known subscriber line apparatus.

According to the present invention, reduction of the sampling frequency of the incoming audio signals converted to digital form is carried out in at least two-steps, preferably in four steps in the decimation portion of the apparatus. Thus the digital filters can be designed with less number of coefficients, i.e. less number of multipliers. For example three digital filters each with only 3 multipliers and one filter with the 5 coefficients, i.e. 5 multipliers can be used. Increase of the sampling frequency in the interpolation portion of the subscriber line apparatus can be carried out by means of corresponding filters with less number of coefficients.

It is therefore a primary object of the present invention to provide a novel subscriber line audio processing circuit in which all signal processing is accomplished after the input voice signals have been converted to digital form.

Another object of the present invention is to provide improved analog-to-digital conversion circuitry for use in the audio processing portions of telecommunications apparatus.

Still another object of the present invention is to provide improved digital filtering techniques for use in the signal processing portions of telecommunications apparatus.

The invention is characterized as it appears from the characterizing part of appended claim 1.

Brief description of drawing

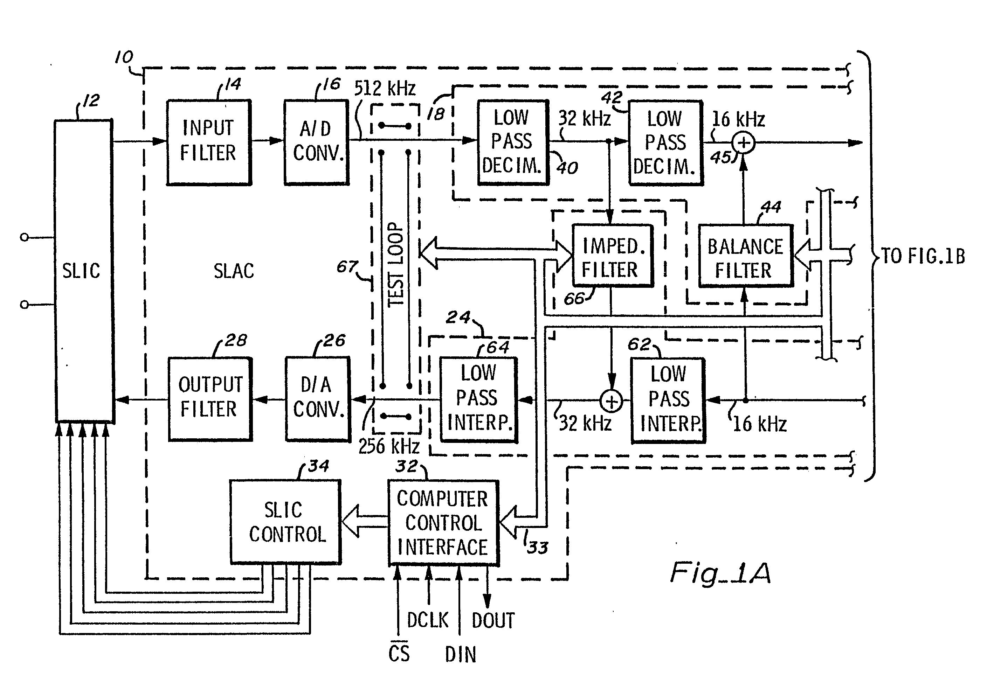

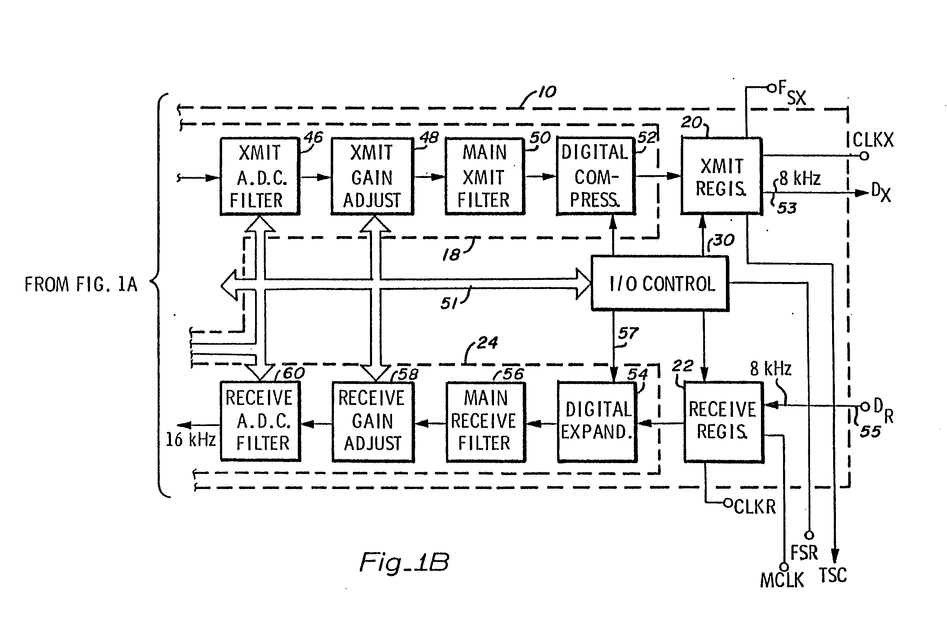

Figure 1 is a block diagram illustrating the system architecture of a subscriber line audio processing circuit in accordance with an embodiment of the present invention;

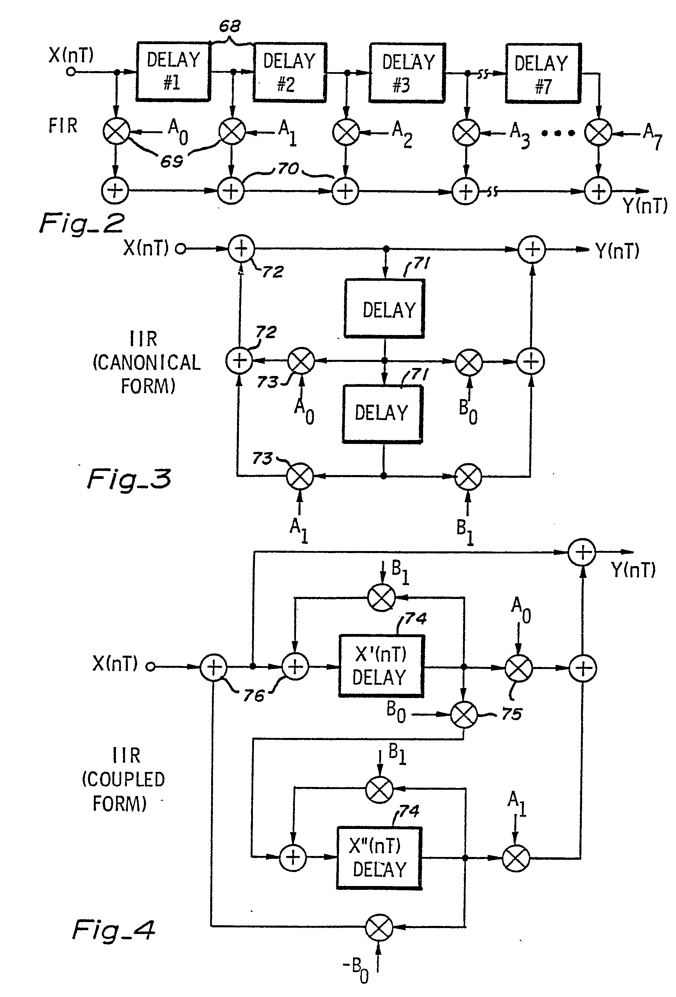

Figure 2 is a diagram schematically illustrating an FIR filter;

Figure 3 and 4 are diagrams schematically illustrating two types of IIR filters;

Figure 5 is a block diagram schematically illustrating a prior art interpolative analog-to-digital converter of the type used in an embodiment of the present invention;

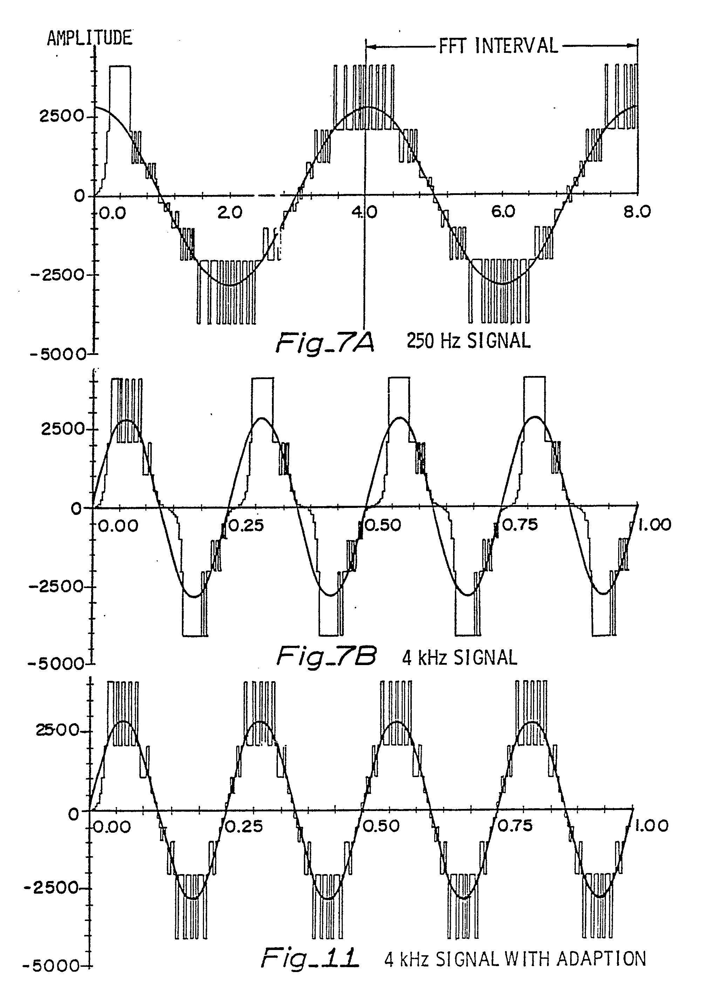

Figures 6(a) and 6(b) respectively illustrate three-level interpolation and two-level interpolation;

Figure 7(a) and 7(b) illustrate operation of apparatus in accordance with an embodiment of the present invention;

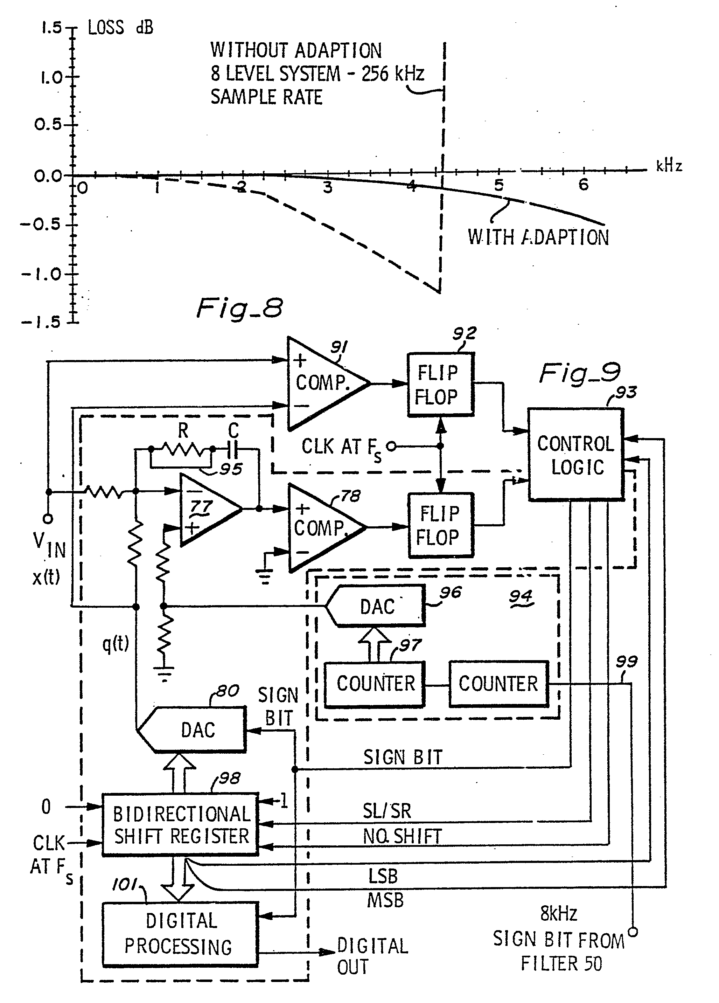

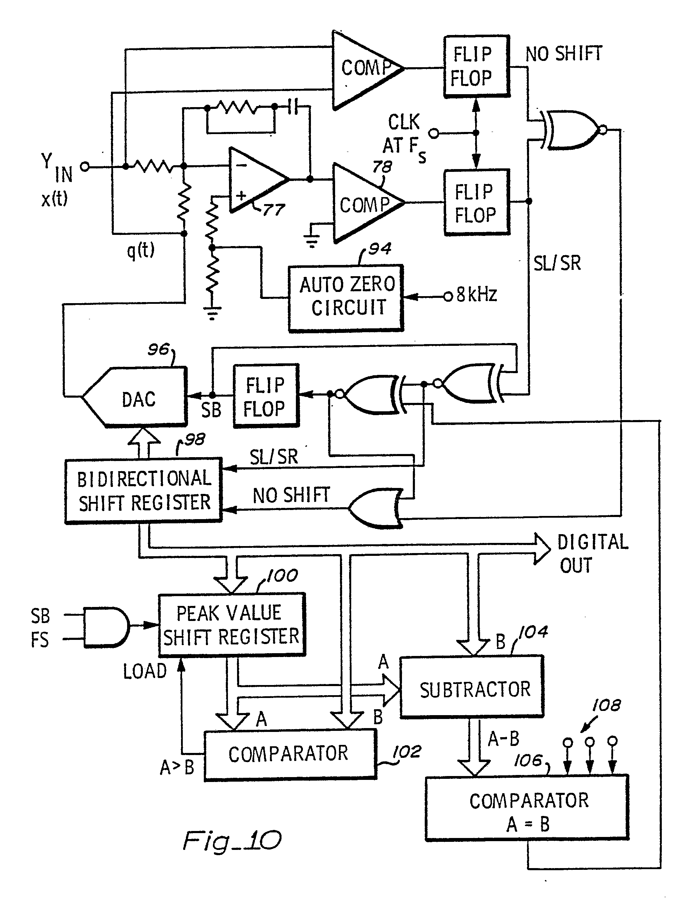

Figure 8 is a diagram illustrating the frequency dependent gain characteristic of an analog-to-digital converter utilizing a converter of the type illustrated in Figure 10;

Figure 9 is a block diagram illustrating an interpolative A/D converter, modified;

Figure 10 illustrates an alternative embodiment of an interpolative A/D converter;

Figure 11 illustrates operation of the A/D converter illustrated in Figure 10;

Figure 12 is a diagram illustrating signal-to-digital noise ratios for adaptive A/D converter;

Figure 13 is a block diagram schematically illustrating a circuit for modifying operation of the converter illustrated in Figure 10;

Figure 14 is a diagram illustrating operation of a converter with and without the modification illustrated in Figure 13;

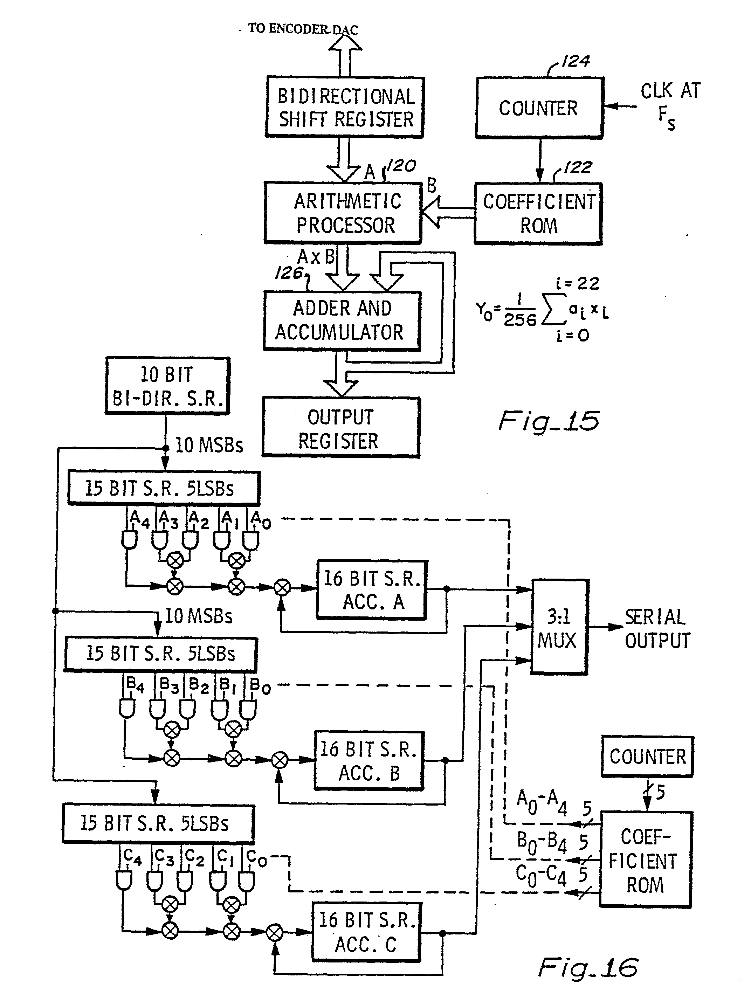

Figure 15 is a block diagram illustrating a digital decimator filter in accordance with an embodiment of the present invention;

Figure 16 illustrates a hardware implementation of the filter illustrated in Figure 15;

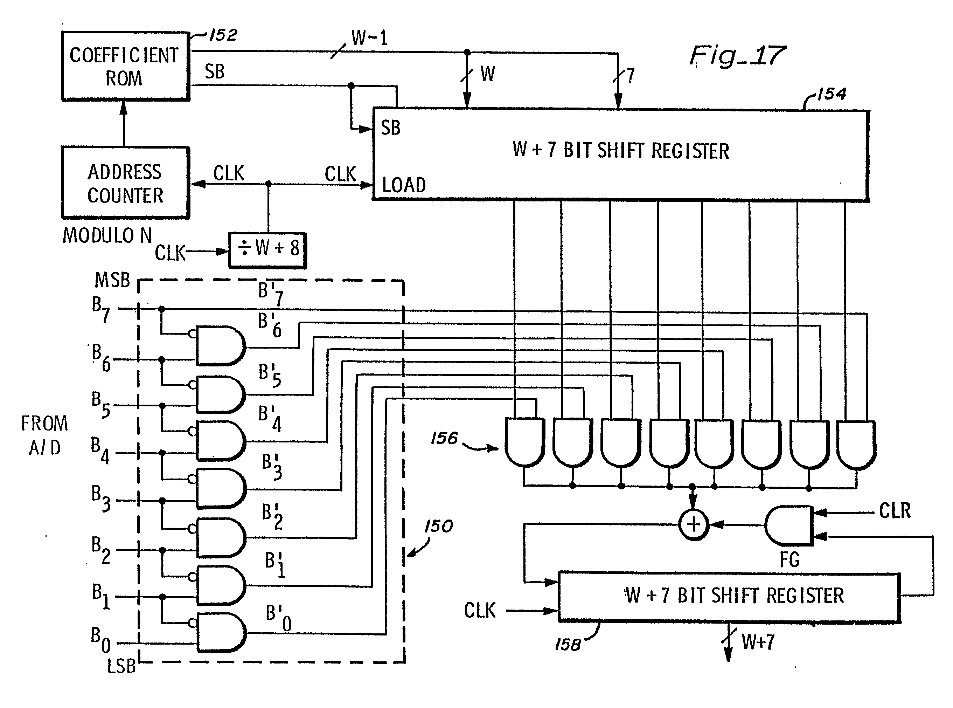

Figure 17 is a logic diagram illustrating an implementation of an FIR filter in accordance with an embodiment of the present invention;

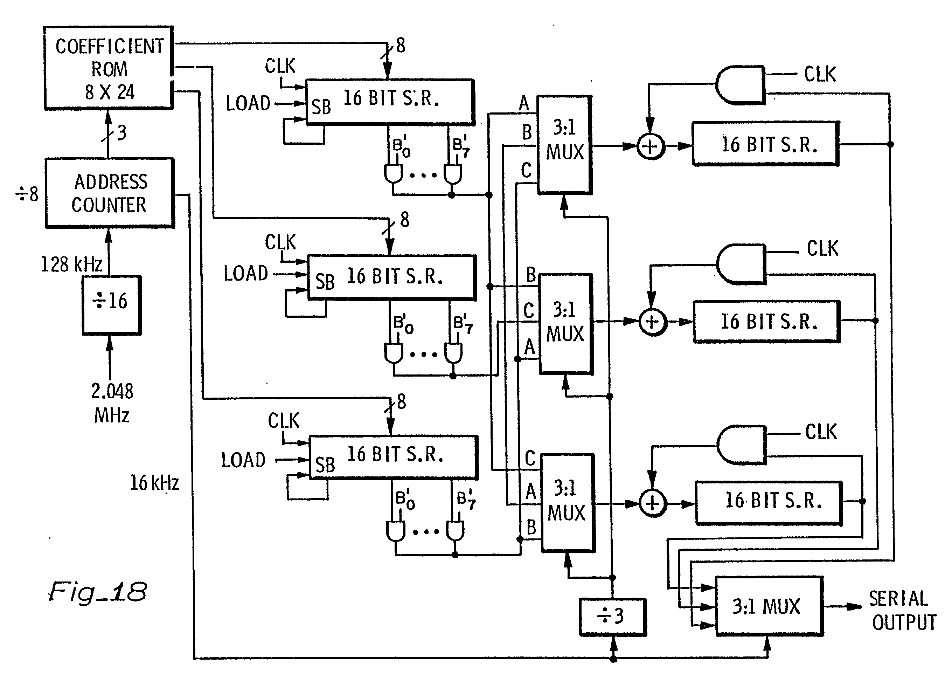

Figure 18 is a logic diagram schematically illustrating implementation of a 23 tap FIR filter in accordance with an embodiment of the present invention;

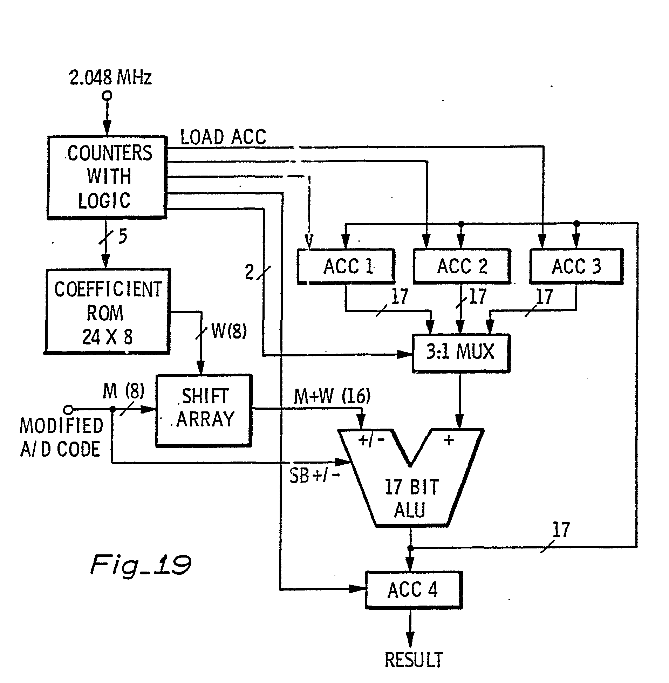

Figure 19 is a logic diagram schematically illustrating a parallel adder filter implementation in accordance with an embodiment of the present invention;

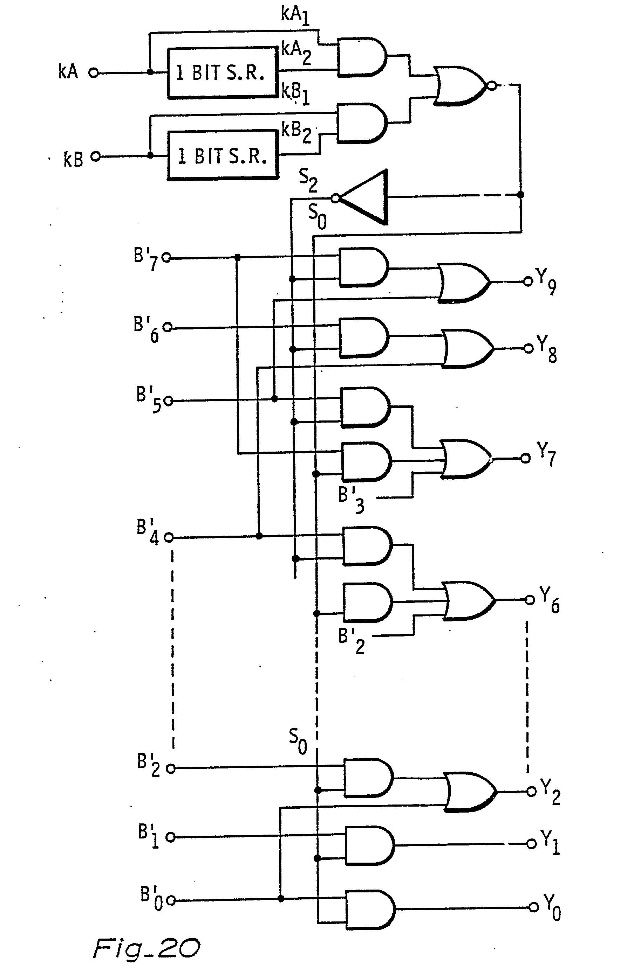

Figure 20 is a logic diagram schematically illustrating a combinatorial logic implementation of a three-tap FIR filter in accordance with an embodiment of the present invention;

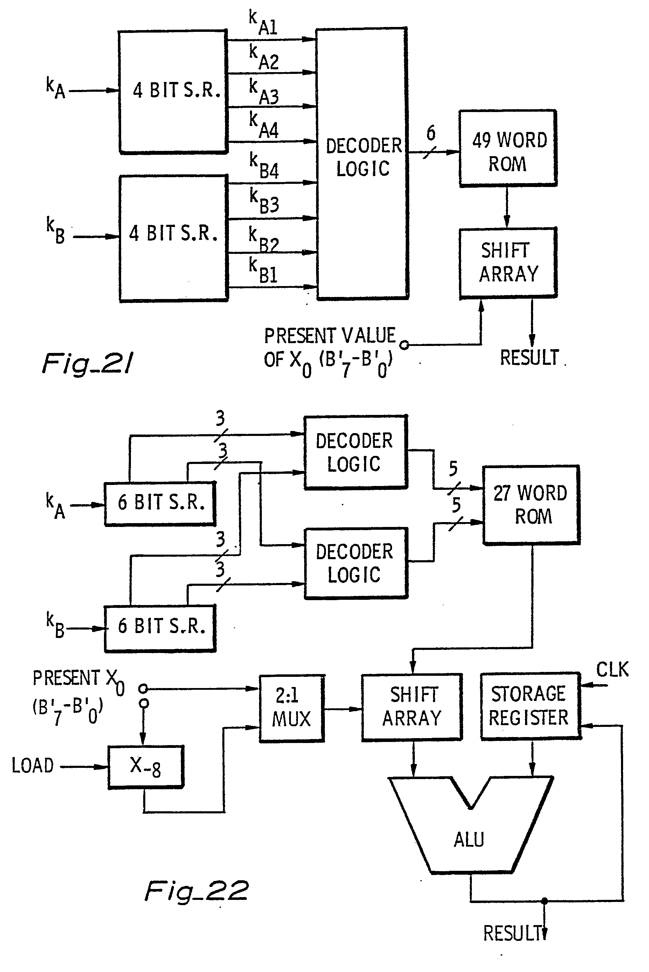

Figure 21 is a block diagram schematically illustrating a five-tap FIR filter utilizing an ROM look up device; and

Figure 22 is a block diagram schematically illustrating an implementation of an eight-tap FIR filter utilizing a ROM look up.

Description of the preferred embodiments

Referring now to Figure 1 of the drawing, a block diagram is shown of a subscriber line audio processing circuit (SLAC) 10 for use in accordance with a subscriber line interface circuit (SLIC) 12. In general, the SLAC consists of means forming a transmit path including an input filter 14, an analog-to-digital converter 16, digital signal processing circuitry 18 and a transmit register 20. The received signal path includes a receive register 22, a receive signal processing circuit 24, a digital-to-analog converter 26 and an output filter 28. In addition, input/output control means 30 is also included along with additional system control circuitry 32 and SLIC control circuitry 34.

More specifically, the input filter 14 is a simple anti-aliasing filter which is used to prevent signals near the sample rate from folding back into the voice band during later decimation stages. Filter 14 should have at least 10 dB attenuation at 508 kHz (if $F_s$=512 kHz). This can be accomplished using a single pole filter placed at 114 kHz. Delay in this filter is nominally 1.4 $\mu$ sec.

As will be explained in more detail below, the A/D converter 16 is an interpolative encoder which samples the input analog (voice) signal at a relatively high sampling frequency, such as 512 kHz (or 256 kHz), and generates multi-bit digital words representative of the signal amplitude at each sample.

The A/D converter is a major contributor to system performance and creates most of the errors in the system. Its performance determines the signal-to-noise ratio, gain tracking, idle channel noise, harmonic distortion, out-of-band signal response, intermodulation distortion and can limit frequency response.

The transmit signal processing circuit 18 includes a pair of low pass decimation filters 40 and 42, a balance filter 44, a transmit attenuation distortion correction (ADC) filter 46, a transmit gain adjust circuit 48, a main transmit filter 50 and a digital compressor circuit 52. As will be further explained below, the A/D converter 16 will also accurately convert signals that are above 3.4 kHz and therefore such signals must be attenuated with low pass filters as in a traditional filter system. The filtering is accomplished in accordance with the present invention by means of a series of low pass filters including those shown at 40, 42 and 50 respectively. The low pass decimator filters 40 and 42 are frequency reduction filters. The transmit filter 50 is not only a low pass filter but additionally includes a high pass filter section to perform 60 cycle rejection that is normally done as part of the anti-aliasing filter in a telephone system.

Digital filters require a great deal of computation and the higher the frequency the more the computation required, because a higher rate of computation is required. Therefore it is important from an economic view point to reduce the number of computations and to reduce the sampling rate as rapidly as possible. Accordingly, the function of filters 40 and 42 is to reduce the sampling rate. More specifically, filter 40 reduces the sampling rate from 512 kHz to 32 kHz by providing a low pass filter function. This filter must assure that no signals above 32 kHz get folded back into the pass band of from 0 to 3.4 kHz. Moreover, filter 40 should have pass band characteristics which are as flat as possible. It is not necessary nor overly critical that the pass band characteristic be kept absolutely flat, however, as this can be compensated for in additional digital filter sections.

One advantage of the use of digital filters is that since they have exactly precise characteristics, other filters can be used to compensate for the effects of a preceding filter. In using an analog filter it is very difficult to use a subsequent filter section to cancel out the effects of an earlier section because filter variation is due to the components of the filter.

The 32 kHz signal out of filter 40 is then fed into a second low pass decimator filter 42 which further reduces the frequency to 16 kHz. This filter must insure that there are no components are folded back into the pass band and that no components exist at its output that would represent frequencies greater than 12.6 kHz, which is 16 kHz less 3.4 kHz. Although these two filters could be combined into one filter structure, in the present invention they are effectively split in two to provide 32 kHz and 16 kHz signal points for use by other circuit components.

Bypassing filters 46 and 48 for a moment, the main transmit filter 50 provides both low pass and high pass filtering functions. The low pass filtering function provides a low pass filter with a roll off of 3.4 kHz to 4.6 kHz which is analogous to the function provided by analog filters in prior art systems. In addition, this filter provides attenuation correction to compensate for the effects of filters 40 and 42 and any effects caused by the prefilter 14. The high pass section of this filter provides 60 Hz rejection and rejects any low frequency signals which are not desirable to be transmitted in a telephone system. The output of filter 50 is a linear code. The choice of a linear code is required to keep good signal-to-noise performance in the system as well as to allow easy processing of the signals.

The digital compressor 52 uses a digital algorithm to convert the linear code to either a μ-law or an A-law code which is required in some telephone systems. If a linear code output is desired, this block can be bypassed in the system. The output of the compressor is fed into a transmit register circuit 20 which when controlled by a system control signals input at 21 will transmit the data to a telephone switch coupled to transmit terminal 50. The functional units described thus far are somewhat analogous to the traditional functions accomplished by the transmit filter and A/D converter of prior art circuits. Traditionally, in prior art circuits, gain adjustment means has been provided in front of the transmit block of the system by means of a gain amplifier of some sort. In the illustrated embodiment, the gain function is performed by a gain adjust circuit 48 which provides gain by multiplying the digital word received from decimator 42 by a digital constant. The digital constant is user programmable and can be accurately programmed such that the gain has a very wide range of variation, ranging from +12 dB to minus infinity dB essentially, as determined by proper choice of gain control words that the user programs into the device.

Whereas, in prior art systems, the gain must be programmed by some manual adjustment of the system, in the present invention since the gain is programmed via a control I/O bus 51, there are no physical components to change and the gain can be programmed at installation under computer control greatly saving cost and time to the manufacturer. The balance filter 44 is used to achieve a transhybrid balance function as will be further described below.

Referring now to the receive path, signals received at terminal 55 are input to receive register 22 and are then input to the processing circuitry 24 which includes a digital expander 54, a main receive filter 56, a gain adjustment circuit 58, receive attenuation distortion correction filter 60, a pair of low pass interpolator circuits 62 and 64, and an impedance filter 66.

Expander 54 functions under program control input at 57 to take either a μ-law or an A-law code and convert it to a 12 or 13 bit linear code as in the transmit section. If the control word indicates that the input word is linear, the expander may be bypassed. The input sample rate of the system is 8 kHz.

The object of the receive path is to simplify the receive filter which presently must filter an 8 kHz component using a low pass filter technique. Additionally, the present receive filters must compensate for distortion caused by low sample rate. This distortion is known as sin X/X distortion and causes an apparent attenuation of signals when the signal frequency gets to be an appreciable percentage of the sample rate. For instance, a 3.5 kHz signal in an 8 kHz sampling system has about 2 or 2.5 dB of attenuation that must be corrected for.

In accordance with an embodiment of the present invention, the goal is two fold. One is to use filter techniques to increase the sampling rate and to determine all the points that are necessary to achieve a much higher sampling rate, i.e., a sampling rate of 256 kHz (or 128 kHz). At the higher sampling rate, there is a two fold advantage. First, the sin X/X distortion is greatly reduced, in fact it is reduced to a point where it is so small that it is not necessary to correct for it. And secondly, the only component other than the voice band components below 4 kHz that is present is the sampling component.

By having a sampling component at a very high frequency such as 256 kHz (or 128 kHz) the size of that component is greatly reduced and is much easier to filter because the receive filter 56 must be flat for voice band signals and have a lot of attenuation at the sample rate. The higher the sample rate the easier the filter is to design because of the bigger difference from the pass band to the stop band of the filter.

Filtering is accomplished in accordance with the present invention using the three filters 56, 62 and 64. The main receive filter 56 is a low pass device similar to the low pass component of filter 50 and runs at 16 kHz, whereas the high pass section of filter 50 runs at 8 kHz. Filter 56 receives an 8 kHz signal but outputs a 16 kHz signal. It must therefore have a considerable amount of attenuation in the band between 4.6 kHz to 8 kHz in order to reject any folded frequencies and to reject the 8 kHz component that is present due to the sampling rate. Whereas, the transmit filter 50 is both a low pass and a high pass filter, filter 56 is only a low pass filter.

The reason for the low and high pass components in the transmit circuit, and only a low pass in the receive filter is that in the transmit path, since the signal is received from a telephone line and such lines typically run along side the power lines, it is very easy to pick up 60 Hz signals in the U.S. and 50 Hz signals in Europe. Some of that signal unfortunately feeds into the telephone system. The high pass filter section 50 is designed to reject the 60 Hz signals and once the signals have been rejected and the system is in digital form, there is no way for 60 Hz signals to get fed into subsequent digital sections. As a result, there is no need for the 60 Hz filter in the receive path.

The output of filter 56 is input to a gain adjust circuit 58 and then into a receive attenuation correction (ADC) filter 60, both of which will be further described below.

The first low pass interpolator circuit 62 receives a 16 kHz input signal from circuit 58 and develops a 32 kHz output signal. It functions as a low pass filter, the purpose of which is to greatly attenuate the 16 kHz component. Since the output is at 32 kHz, this filter introduces a 32 kHz component.

The second low pass interpolator circuit 64 is also a low pass filter which outputs either a 256 kHz (or 128 kHz) signal in the present system to provide low pass filtering of the 32 kHz components and to introduce some components of lower magnitude at the higher frequencies. Filters 62 and 64 are mainly concerned with filtering the high frequency components. If they are not perfectly flat in the pass band, such performance is highly predictable and can be compensated for by filter 56, which in the present system it does because filters 62 and 64 do attenuate some of the signals around the high end of the pass band, i.e., around 2 or 3 kHz. Accordingly, filter 56 is provided with a compensation network that compensates for the attenuation caused by filter 62 and 64.

The output of filter 64 is then fed into the D/A converter 26 which converts the signals to analog form and passes them through the output filter 28. In telephone systems, the high frequency components must be at least 28 dB down from the low frequency components. At a 256 kHz sample rate, the signal is 28 dB lower than the component at 3.4 kHz. Thus, theoretically no post filter or smoothing filter is required. However, in the present system, the filter 28 is included for safety purposes.

Digital filters are complex arithmetic processors that implement the basic filter equation

$$Yi = \left[ \frac{a_0 + a_1 Z^{-1} + a_2 Z^{-2} + \ldots a_n Z^{-n}}{1 = b_1 Z^{-1} + b_2 Z^{-2} + \ldots b_m Z^{-m}} \right] Xi \qquad (1)$$

where $X_i$ represent the input samples and $Y_i$ represent the output samples.

In Figure 2 of the drawing, an 8 tap FIR filter sometimes referred to as a transversal or non-recursive filter, is schematically illustrated and includes seven storage or delay units, eight multipliers 69 and seven adder units 70. As will be appreciated, this circuit will implement a filter of the form represented by the equation

$$Y_0 = A_0 X_0 + A_1 X_{-1} + A_2 X_{-2} + \ldots A_7 X_7 \qquad (2)$$

wherein the $A_0$—$A_7$ represent tap coefficients input to the multipliers 69 and the $X_0$—$X_{-7}$ represent the present and delayed input values of X which are to be multiplied by the respective tap coefficients. The illustrated 8 tap device is unconditionally stable in that it has no feedback and the output value is only a function of a previous set of input values.

In Figure 3 an IIR filter of the canonical form sometimes referred to as a second order recursive filter is illustrated which includes two delay units 71, four adder units 72 and four multiplier units 73. This circuit can be used to schematically represent a filter having the equation

$$Y_0 = X_0 + A_0 X_{-1} + A_{-2} X + B_0 X_{-1} + B_1 X_{-2} \qquad (3)$$

and is suitable for use as a low pass filter. In general this filter, much more efficient than the FIR filter (only two memory units), has faster roll-off, etc.

In Figure 4, an IIR filter in coupled form is schematically illustrated. This device is suitable for use as a high pass filter having the equation

$$Y_0 = X_0 + (A_1 - B_0)X''_{-1} + A_0 X'_{-1} \qquad (4)$$

where

$$X'_0 = X_0 + B_1 X^1_{-1} - B_0 X''_{-1}$$

and

$$X''_0 = B_0 X'_{-1} + B_1 X''_{-1}$$

Note that this filter includes two delay units 74, six multipliers 75 and five adders 76.

A filter can be considered to have finite impulse response (FIR) if in equation (1) above all $b_i = 0$ and otherwise is considered to have an infinite impulse response (IIR). IIR filters tend to be more efficient in that a given filter characteristic can be implemented with fewer coefficients. The basic tradeoffs in looking at filters are the total number of multiplications and additions per second, the total amount of memory required to store input and output samples (RAM) and the total memory required to store the coefficients (ROM).

For maximum efficiency the filters should run at as low a sample rate as possible. This statement applies to both FIR and IIR filters. IIR devices require more coefficients to implement the filter as the sample rate increases. In fact, the number of coefficients approximately doubles as the sample rate doubles. Thus, as sample rate increases, the amount of RAM and ROM increases linearly and the arithmetic rate increases as the square of the sample rate increases (higher math rate×higher number of computations). IIR filters do not require more coefficients as sample rate increases but require larger words so the computation takes longer (using serial/parallel multipliers) and the computation rate increases with sample rate.

The proper architectural choice seems to be to try to reduce the sample rate of the system by using a low pass filter, the stopband of which begins at a frequency much lower than $F_s/2$. For example, if a low pass filter removes all components below $F_s/16$ then the output of the filter can be described by a system with a sample rate of $F_s/8$, i.e. $2 \times F_s/16$. This sample rate reduction is achieved by using every eighth output of the filter and throwing away the seven others. Notice that in an interpolative A/D converter the data is oversampled by 32 to 64 times the frequency of interest so that the filter required to limit the signal to $F_s/16$ is still fairly simple. In the telephone type application, sample rate can be reduced from 512 kHz to 32 kHz

**0 054 024**

with a low pass filter the stopband of which begins at 16 kHz. Since the passband ends at 3.4 kHz, this filter is much simpler than the filter required to perform actual low pass filter functions (it has a 4.6 kHz stopband).

The low pass filter is most efficiently implemented as an FIR filter. This conclusion is based on the following reasoning. An IIR filter used as a low pass sample rate reducer (decimator) must operate at the sample rate, calculate results at the initial sample rate and then throw away 7 of 8 results. All results must be calculated because each results is needed to calculate the next result. The low pass filter, however, can be a second order filter but requires 5 coefficients or 5 multiplies and 5 adds every 4 μsec, or a multiply rate of 2.5 MHz and an add rate of 2 MHz. An FIR filter must only calculate every eighth result. It does not have to calculate the seven unused results because they are not needed in the calculation of future samples. A 20 coefficient filter can be implemented that requires 20 multiplies and 10 adds at 32 kHz. The multiply frequency is reduced to 1.28 Hz and the add rate is 1.204 kHz. Furthermore, it can be shown that the amount of memory required is comparable and the FIR filter can be implemented with a simple serial adder structure to save hardware.

The most complex function in the digital filter is the multiplication. Multipliers can require large amounts of hardware to implement and can dissipate substantial power. As indicated above, the decimator filter requires very high multiplier rates of 1.2 MHz to 2.25 MHz. Multiplication is normally accomplished in a fully parallel combinatorial circuit which requires a tremendous amount of hardware, or as a serial/parallel function with adding and shift. The serial/parallel multiplier requires an N bit shift register, N+M bit adder and N clock cycles to perform an N×M multiply. However, neither of these approaches is a good choice for an LSI processor.

One promising technique is called short word optimization. Using this technique number of 1's is minimized in the coefficient and the multiplication only requires additions when a 1 is present. For example, with a barrel shifter and a coefficient of 12 bits which contains only 3 ones, a multiply can be accomplished in 3 clock periods by ignoring all of the additions where zeros occur in the coefficient. Techniques for simplifying the coefficients are quite complex and require compromising the filter to some degree (this can be compensated for by increasing its complexity). FIR filters which have more coefficients seem to have less sensitivity to coefficient simplification although IIR filters designed from low sensitivity real filters also can have good insensitivity to coefficient simplification.

Since the interpolative A/D converter is a highly over sampled system with the information of interest in a lower frequency band than the output of the system, digital filters such as those shown at 40, 42, 46 and 50 in Figure 1 are required to remove the high frequency error components generated by the converter, to average and smooth the low frequency signal components, and to do any other low frequency filtering required. The digital filtering can be accomplished with a variety of different architectures using finite impulse response (FIR) and/or infinite impulse response (IIR) filters to implement the system.

In the preferred embodiment of the device generally illustrated in Figure 1 of the drawing, the low pass decimator 40 is comprised of a four tap FIR filter and two 3-tap FIR filters, the first of which reduces the 512 kHz signal to 128 kHz, the second of which reduces the 128 kHz signal to 64 kHz, and the third of which reduces the 64 kHz to 32 kHz. The second low pass decimator 42 is embodied as a 5-tap FIR filter which reduces the 32 kHz signal to 16 kHz, the transmit ADC filter 46 is an 8-tap FIR filter. Transmit gain adjust filter 48 is a one tap FIR filter and main transmit filter 50 is a three IIR filter device including two low pass filters of the canonical form and one high pass filter of the coupled form. The main transmit filter reduces the 16 kHz signal to 8 kHz. The balance filter 44 is an 8-tap FIR device.

The system allows both the incoming audio and a portion of the outgoing (receive) signal to flow into input filter 14. But since the outgoing signal generated is known as well as the time required for it to come back around through the system, the balance filter 44 can be used to generate a cancellation signal which added into the transmit path at 45 will cancel out the returned signal. Moreover, even though the line characteristics are not initially known, the characteristics of the system are known. However, the user can determine the line characteristic and program filter 44 to provide proper balance and since filter 44 is programmable in digital form such cancellation can be very accurately accomplished.

The main receive filter 56 includes 2 canonical IIR low pass filters which increase the received signal from 8 kHz to 16 kHz. Receive gain adjust filter 58 is a one-tap FIR filter, receive ADC filter 60 is an 8-tap FIR filter, and low pass interpolator 62 is a 5-tap FIR filter which increases the 16 kHz signal out of filter 60 to 32 kHz. The second low pass interpolator is comprised of three 3-tap FIR filters which respectively increase the 32 kHz signal to 64 kHz, 128 kHz and 512 kHz.

Impedance filter 66 is a 4 (or 8) 8-tap FIR filter which is used to match the line characteristics. More specifically, impedance filter 66 can be used to modify the input impedance of the system as seen at the 2-wire system input port. Filter 66 effectively feeds the voltage generated at the input port back around and into the incoming signal. If done with proper amplitude and polarity the value of the effective input impedance can be changed to match the characteristic impedance of the telephone line. Control of the impedance of filter 66 thus makes it possible to reject echoes and to match different input lines. However, modifying the input impedance makes the gain of the system frequency sensitive. But, the transmit and receive ADC filters 46 and 60 can be programmed to compensate for any such attenuation distortion created by use of filter 66. The gain adjust filters can also be used to add built in losses for eliminating transmission problems such as ringing and oscillation.

8

The test loop 67 is provided to permit testing of either the device or the line and may be used to facilitate the selection of coefficients for various filters.

The SLAC also includes a serial control interface 32 to a digital control computer for programming a number of functions on the device. The interface has a serial control bus 33 which is used to program the transmit and control time slots for the SLAC as well as setting the transmit and receive gain of the device. It has a power down function as well. Timing inputs include a data clock DCLK, data input DIN, data output DOUT, and chipselect $\overline{CS}$ for the serial interface, a master clock MCLK for the time control of the ALUs, transmit and receive clocks CLKX and CLKR, transmit and receive frame synchronization pulses FSX and FSR and a time slot strove TSC for the interface to the PCM system. The time slot assignments are with respect to the frame synchronization pulses FS. When the transmit path goes active, a time slot strobe pin (TSC) is pulled low to drive a tri-state buffer if that is required in the system. The transmit and receive PCM buffers have separate clock inputs in order to be able to operate asynchronously, but in most systems the transmit and receive clocks will be in common. The frame synchronization pulses are also separate for transmit and receive but in most systems a common pulse will be used, and if different time slots are required, this can be programmed in on the time slot selection control input.

Using the serial control bus 33 transmit and receive time slot information is programmed into the device to determine when it is to transmit and receive data; coefficients for the impedance filter 66, balance filter 44, transmit ADC filter 46 and receive ADC filter 60 are all programmed in one byte at a time; and the transmit and receive gain adjust coefficients are also programmed in. All of this data can be read back out on the DOUT line of bus 33 under appropriate control. Additionally, the device can be programmed into special configurations using bus 33. For example, the device can be configured to operate using μ-law, A-law or linear coding.

Furthermore, the four programmable filters 44, 46, 60, and 66 can all be set to default values, i.e., the impedance filter 66 and balance filter 44 can be set to zero, and the two ADC filters 46 and 60 can be set to unity. The gain adjust filters 48 and 58 have default values that can be set at unity. The receive gain adjust filter 58 also has a second default value of zero for cutting off the receive path.

The test condition is set by programming in a command which modifies the input to the various filters, i.e., the output of the low pass interpolator 64 is fed into the low pass decimator 40 for digital loopback, and for analog loopback, the output of the A/D converter 16 is fed into the D/A converter 26. These operations are of course accomplished under program control. An additional feature of the device is that in the outputs to the SLIC, a TTL latch is provided by which the outputs are programmable via control words on the serial interface bus 33.

Referring now to Figure 5 of the drawing, a schematic block diagram is shown illustrating a simplified version of a prior art interpolative encoder of the type used to implement the A/D converter 16 shown in Figure 1. In the basic encoding loop, negative feedback is used to minimize the average difference between the analog input x(t) and its quantized representation q(t). The difference between x(t) and q(t) is integrated and summed with the instantaneous difference between x(t) and q(t) by an integrating amplifier 77 and the polarity of the result is detected by a comparator 78. The output of comparator 78 is fed into shift control logic 79 which directs an increase or decrease in the quantized signal q(t) generated by a digital-to-analog converter (DAC) 80. In the preferred embodiment logic 79 includes an 8-bit bidirectional shift register that acts as a digital accumulator filling with ones at the bottom (the least significant bit—LSB) and zeros at the top. As the register fills with logical 1's, the magnitude of the quantization increases. The polarity of the quantization is also monitored by logic 79 and is output in the form of a sign bit SB on line 81. The magnitude is output on lines 78.

Additional details and operational characteristics of a circuit similar to that illustrated may be found in an article by Bruce A. Wooley and James L. Henry entitled "An Integrated Per-Channel PCM Encoder Based On Interpolation", pp. 14—20, *IEEE Journal of Solid-State Circuits*, Vol. SC 14, No. 1, February 1979.

Although the above-described interpolative A/D converter and others disclosed in the prior art may be used in a system in accordance with the present invention such converters suffer from several disadvantages. Since the comparator output is sampled at $F_s$ (which is much greater than the input frequency range of interest) and is used to control the shift register to determine the new quantized output, the DAC output must change at every sample because a 1-bit code allows only two conditions, i.e., increase and decrease, and does not allow a state where the DAC output remains constant. More specifically, the shift register control only allows the DAC inputs to be 0, ±00000001, ±00000011, ±00000111, ±00001111, ±00011111, ±00111111, ±01111111, or ±11111111. As pointed out in *Candy et al*, "A Per-Channel A/D Converter Having 15-Segment μ-255 Companding"; pp 33—42, *IEEE Trans. on Communications,* Vol. com-24, No. 1, January 1976, these codes have been chosen to correspond to 4/3 times the end points of the μ-law chord characteristics so that the average of any two points is the end point of a μ-law chord. The shift register controller allows only 17 levels in the system, e.g., 8 positive levels, 8 negative levels and 0. The feedback loop will cause the A/D to try to force the integrator output towards zero so that the integral of q(t) will try to equal the integral of x(t).

For DC input signals, with proper damping set by the resistor R and capacitor C, the system will generate a pattern such as that illustrated in Figure 6(a) which is a three level oscillation around the input signal. The authors describe a 256 kHz system wherein 32 samples are effectively averaged two steps at a time. Each two reading step is averaged by taking the lower of the two readings and dropping the 4/3 scale factor. For example, if one reading is 4/3 of the end point.n, the next lower reading is 2/3 the end point n, and the average is end point n which is the same code as the lower reading. This average reduces the number of samples to 16 and they are averaged in a parallel 12-bit adder to give a 12-bit result. The resolution in the adder is a function of the number of samples (N) averaged and the resolution of each sample, i.e., $\log_2 N \times$ resolution of an individual sample=resolution of result.

*Kawahara et al,* infra, and others have also described the use of a 512 kHz system with averaging done only down to 32 kHz. However, all these systems exhibit several problems the reasons for which will now be discussed along with solutions proposed in accordance with an embodiment of the present invention.

1. Frequency dependent gain.—With regard to this problem, the sample rate and the number of levels in the converter are the basic system constraints. As the input frequency increases, the system has more trouble tracking the signal as shown in Figures 7(a) and 7(b). As will be noted in Figure 7(a), the system tracks fairly well at 250 Hz. However, when the frequency is increased to 4 kHz the tracking deteriorates as illustrated in Figure 7(b). For a signal to go from + full scale to − full scale takes a time of (2M−1)T and maximum frequency at full amplitude that the system can generate is $F_s/2(2M-1)$. For the 8 level system, this is $F_s/30$. However, near these frequencies, errors are created. Even at lower frequencies, the signal distortion is significant. A frequency dependent gain can be observed by measuring the output component of the A/D converter at the input signal frequency and the results for a 256 kHz sample rate and an 8 level system are shown in Figure 8. Increasing the sample rate to 512 kHz improves the response at low frequencies but frequency dependent gains still occurs at higher frequencies. This can cause significant problems in the system if it is not corrected.

2. DC signals are limited as a function of sample rate.—Limited DC resolution is due to the difference between levels and the number of samples averaged. In the above-described system, every other level represents a level halfway between the two levels. The three level oscillation in Figure 6(a) can be replaced with a two level oscillator at $F_s/2$ as shown in Figure 6(b). The two levels are spaced 2:1 apart and the resolution is determined by the number of samples averaged. In the approach taken by *Candy et al,* supra, 16 samples are averaged so that the resolution of signal is approximately one part in 32 or similar to the resolution obtained in following the μ-law or A-law practice. A higher sample rate, i.e., 512 kHz would allow twice as many samples to be averaged and would allow more resolution, i.e., 1:64. The resolution of these systems can be said to be $1:(F_s/F_{out})$ where $F_{out}$ is the output sample rate.

3. Dynamic range is limited as a function of sample rate.—Limited dynamic range is a problem that is similar to limited resolution. The dynamic range is the ratio of the smallest level resolved to the largest. The smallest level resolved is near zero and is $X_0(F_{out}/F_s)$ where $X_0$ equals the output for the code 00000001. The largest level is $2^M X_0$ where M is the number of levels (positive or negative) in the DAC. The dynamic range is therefor $2^M F_s/F_{out}$ and can be increased by either increasing M or $F_s$. However, if M is increased without changing $F_{sD}$, the frequency where tracking problems occur is lowered.

4. Limited high frequency signal capability.—When high frequency signals are applied to the converter which cannot be tracked, the output tends to collapse and go 180° out of phase with the input. Under some circumstances in-band signals (low frequency) are also created by the non-tracking mode which are less than −30 dB below the input level.

5. Out-of-band signals generating in-band signal components.—The averaging digital filter used in the above-described circuit is not the optimum configuration because it does not adequately filter out all out-of-band signals and can cause folding of out-of-band signals into the passband. Out-of-band signals are generated not only by out-of-band input signals but by the A/D switching at the high sample rate of 256 kHz or 512 kHz. Signals between 4 and 8 kHz are not adequately attenuated and will fold back into the passband (assuming a 0 to 3.4 kHz passband). Signals near 12 kHz will also fold back into the passband with only −13 dB attenuation. Therefore, it seems that this A/D converter would require a precision prefilter in order to be useful for voice band signal processing.

The A/D generates out-of-band signals in the range of −20 to −50 dB below the input level and some of these signals will fold back with less than −30 dB attenuation and will increase the in-band noise. They can also increase the system signal-to-noise ratio. The interpolator with 512 kHz input and 32 kHz output averaging filter has better performance. This filter requires complex filtering afterwards but can eliminate all but a simple prefilter. Signals falling within the bands of 32 to 36 kHz, 60 to 68 kHz, etc., still fold directly into the passband and more attenuation is desirable in those bands.

Referring now to Figure 9 of the drawing, an improvement over the A/D converter shown in Figure 5 is illustrated. Although somewhat simplified in form, the portion of the circuit enclosed within the dashed lines 90 is essentially the same circuit illustrated in Figure 5. A second comparator 91, a flip flop 92 and additional control logic 93 have been added to generate a 2-bit code rather than the 1-bit code developed by the embodiment of Figure 2, and a digital auto-zero circuit 94 has been added to add offset voltage to amplifier 77.

The additional comparator 91 is used to sample the instantaneous difference between the input x(t) and the quantized output q(t). Damping resistor R is no longer needed and is shown shorted by a line 95. As a result, the original comparator 78 compares only the integral of the delta signal [x(t)−q(t)]. The two comparator system has no overshoot or undershoot (beyond one level) and does not need analog damping.

With one comparator only two new states were possible—an increase or a decrease from the previous value. With two comparators it is possible for q(t) to have four possible new states. The extra states can be increase (or decrease) by a greater (or less) amount, or stay the same. In the present system, the only extra state causes the output to remain constant. The ability to remain at a particular level insures that for a DC input the system will oscillate between the two levels that bracket the input, changing at the sample rate. This is an improvement over the one comparator system which, as shown in Figure 6(b), can only be reduced to a two level oscillation at half the sample rate. The second comparator gives an effective doubling of information (for DC signals) and provides 6 dB more dynamic range and 6 dB more resolution with no increase in sample rate or number of levels.

The second comparator also provides an additional 2.5 dB of dynamic range by allowing the signals in the DAC 76 to be 2.5 dB lower. The one comparator system requires that the maximum DAC output be 4/3 the maximum input level since that level is represented by the system oscillating between 11111111 ($Vin_{max} \times 4/3$) and 01111111 ($Vin_{max} \times 2/3$). The two comparator system can hold the output at 11111111 to represent $Vin_{max}$ and therefore with the same full scale range, it can use levels that are 3/4 those in the one comparator system. This allows 2.5 dB more dynamic range. However, the digital signal processing must be modified to use the two comparator system. No longer can every two samples be averaged by using the digital code of the lower reading and therefore, the average (or other signal processing algorithm) must be applied to all samples.

The auto-zero circuit 94 includes a DAC 96 and a pair of 6-bit up/down counters 97 and 98. The counters integrate the sign bit of the 8 kHz which is developed in transmit filter 50 in front of its high pass filter section and fed back via lead 99. If an offset exists in the system, the counter 97 and 98 will count up or down until the six-bit code (sign bit plus five magnitude bits) fed into DAC 96 causes it to develop an output level suitable for input to amplifier 70 to compensate for the offset. Thereafter the number of plus and minus sign bits will remain the same and the counter 97 will just toggle back and forth. The lower six bits in counter 98 are used as damping bit for reducing the frequency of any toggle to below the pass-band of the system such that if any toggling exists, it will be at a low frequency and be filtered out by subsequent high pass filter of transmit filter 50.

Another independent improvement to the system is illustrated in Figure 10 and utilizes an adaptive method of controlling the shifting process in order to allow more levels to be used to obtain greater dynamic range but remove unneeded levels to improve frequency response. In addition to the components of the embodiment illustrated in Figure 9, this embodiment includes a peak value register 100, a comparator 102, a subtractor 104 and a comparator 106. The adaptive algorithm is based on the fact that the system loses track of high amplitude signals as frequency increases because it has difficulty following the signal. The major problem occurs as the signal goes through zero where the quantizer has many low level signals and the input is changing at its maximum rate. This is the problem demonstrated in Figure 7(b).

The levels near zero contain limited information for large amplitude AC signals and if they can be removed, the system accuracy will not be significantly reduced. The adaptive algorthm senses the peak magnitude during each cycle and removes an appropriate number of levels around zero to allow the system to track the input signal. More specifically, the peak value of the quantized signal in register 98 is stored in the peak value register 100 and the stored peak value is compared to the present value by the comparator 102. At the same time, the present value is also subtracted from the peak value by the subtractor 104 and the difference is compared to a reference input to comparator 106 at 108. However, the subtractor output is not simply the difference between the two inputs, but rather is the difference between the number of ones in each of the inputs A and B.

The output developed by comparator 106 causes the sign bit (SB) to change. As the quantized value goes toward zero, the levels around zero are removed by skipping over them and changing the sign bit. The level at which the sign bit is changed is determined by the peak level. In the adaption illustrated, it is five levels below the signal peak (unless the peak level is 00001111 or lower in which case the adaption reverts back to normal operation) and removes a different number of levels dependent upon the input amplitude keeping ten active levels.

The peak value must be able to decay as the signal level changes. This can be accomplished in numerous ways. For example, (a) by reducing one level at each zero crossing, (b) by reducing the level if a particular level is not reached for a fixed period of time (such as 125 μsec in a PCM system with final output at 8 kHz sample rate), or (c) by reducing it at a fixed periodic rate. The implementation presently used and illustrated in Figure 11 reduces the peak level at each zero crossing. This adaption technique reduces the number of active levels from 17 to 10 and the maximum frequency that can be tracked is increased from $F_s/32$ to $F_s/18$. The penalty paid is a very slight increase in signal-to-quantization noise for AC signals. The increased noise is due to the removing of levels near zero. However, the levels removed represent signals which are less than 1% of the period of a sign wave and the increase in signal-to-noise is minimal.

The frequency dependent gain characteristic is also modified and pushed out higher in frequency with much less effect on low frequency signals as shown in Figure 8. Figures 7(b) and 11 show the response of a 0 dB, 4 kHz signal with and without adaption respectively. This scheme gives frequency response benefits without an increase in sample rate and with no real penalty in performance, specifically dynamic range, resolution, and signal-to-noise ratio.

The adaption scheme can allow the system to increase its dynamic range without the penalty to

11

# 0 054 024

frequency response. The DAC illustrated in Figure 5 uses 17 levels and has just enough dynamic range and resolution for the application. It can only be increased by an increase in sample rate and/or the addition of more levels. However, to add more levels would require a higher sample rate because the frequency response characteristic would not be acceptable otherwise. With the adaption scheme shown in Figure 10, more levels around zero can be added without degrading frequency response because they will only be used for very low signals.

A system using a 10-bit DAC with 21 levels from 0000000000 to $\pm$1111111111 would still use only the five highest levels as indicated by the peak register, and would have an additional 12 dB of dynamic range since the lowest level would now be $Vin_{min}$ instead of $Vin_{max}/256$. The levels added would be near zero as the maximum level would always be equal to $Vin_{max}$ (or $4/3\ Vin_{max}$ if only one comparator is used). The number of levels near zero that can be added is limited by the noise of the system and as long as there is the same relative accuracy of all DAC levels, the system performance is expanded to cover another 12 dB of dynamic range. Figure 12 shows the signal-to-noise ratios for 17 level and 21 level systems using the adaptive algorithm.

The adaptive algorithm described above improves frequency response and dynamic range at a given sample rate. It only operates on the magnitude of the input signal and behaves identically independent of frequency.

A further addition can be made which allows the system to modify the adaption based on the input frequency. This addition senses that the input frequency exceeds a frequency where the A/D converter can accurately track the input and modify the adaption by removing more levels around zero. This will increase noise for high frequency inputs but will allow the input to be tracked up to higher frequencies. A modification which enables such capability is the addition of the circuit shown in Figure 13 to the circuit of Figure 10. This circuit compares the sign bit of the input (developed by a comparator 110) with the quantized sign bit (from DAC 96) over a 32 sample period as determined by a 4-bit counter 112. If they are different for more than 50% of the samples, the system is not accurately tracking the input and the adaption is modified by removing more levels. This system allows the A/D converter to track the input using 10 active levels first, and then reducing the number of levels to 8, 6 and 4 as determined by the 6-bit counter 114, the two-bit counter 116 and the decoder 118. See the following table.

| $Q_0$ | $Q_1$ | Adaption status |
|---|---|---|
| 0 | 0 | uses 10 levels |
| 0 | 1 | uses 8 levels |
| 1 | 0 | uses 6 levels |
| 1 | 1 | uses 4 levels |

This creates switch-over points near $F_s/18$, $F_s/14$, $F_s/10$ and $F_s/16$. Above $F_s/16$ the system does not track further.

The system could also be modified to start out using all 17 (or 21) levels and then remove levels as it senses that it is not tracking. This dynamically changed adaption has a fast "attack" time (32 samples) but must have a long "decay" time (generated by the 6-bit counter 114) in order to remain stable. Figure 14 shows the response to a 16 kHz signal with and without this improvement.

Still another area of possible improvement resides in the digital signal processing of the results of the A/D converter. *Candy et al*, supra, have described the use of an averaging filter to reduce the output frequency of the A/D converter, and *Kuwahara et al*, in "Interpolative PCM CODECS with Multiplexed Digital Filters", p. 174, *Proceedings 1980 IEEE International Solid-State Circuits Conference*, February 14, 1980, disclose the use of an averaging filter to reduce the output frequency to 4 times the final output and then an infinite impulse response (IIR) filter to filter the lower frequencies. However, two key points are missed in these prior art approaches.

The first is that the sample rate is being reduced by the decimation filters and the most important task of the filters is to insure that the frequency components folded into the passband are adequately attenuated. If components in the passband have attenuation distortion, such distortion can be corrected in a filter at or near the final sample rate. Averaging filters do not really give adequate attenuation to out-of-band signals.

The second point is that the decimation filter used with the A/D should provide adequate attenuation at all bands of width $2F_{pass}$ around all folding frequencies. One way of providing this performance is to place multiple transmission zeros at all folding frequencies. A filter capable of doing this is shown in Figure 15. This filter includes an arithmetic processor 120, a coefficient ROM 122, a counter 124 and an adder and accumulator 126. The filter equation is

$$Y_0 = \frac{1}{256} \sum_{i=0}^{i=22} a_i x_i \qquad (5)$$

12

The filter reduces the frequency to $2F_{sfinal}$ and allows a final digital filter to do any signal shaping. This filter includes the composite of all the decimator stages required to reduce the sample rate down to 16 kHz.

This filter provides significantly more protection against out-of-band components than an averaging filter and eliminates the need for all but a simple single pole filter in front of the A/D converter. The filter also processes more than N terms for a frequency reduction of N and allows more resolution and dynamic range for the same A/D converter. The idea of processing more than N terms in a frequency reduction filter requires that the filter have some memory but this can be kept to a minimum as indicated by the embodiment shown in Figure 16. This embodiment provides a single filter stage with an output at 16 kHz rather than the earlier described circuit which operates with multiple simple filters reducing the sample rate with several intermediate stages. The A/D converter output is used as part of 3 different summations which are stored in memory. Furthermore, the A/D output gets multiplied by 3 different constants and added to each summation. The summations are completed at different times and a new summation has begun.

In summary then, an interpolative A/D converter can be improved using any of three independent techniques: (a) By adding a second comparator to give 6 dB (8.5 dB) additional dynamic range and 6 dB more resolution at a given sample rate, (b) By adding an adaption scheme to allow better tracking of high frequency signals and as much additional dynamic range as is needed, limited only by system noise; or (c) By modifying the frequency reduction filter from an averaging filter to a filter that provides more attenuation around folding frequencies and one that processes more samples to improve dynamic range resolution and reduce noise.

An FIR filter can be designed for the output of the interpolative A/D converter using the fact that the A/D output can be converted to a code which contains only a single 1. The filter can be implemented with only additions and shifts, and the number of adds equals the number of coefficients. The amount of memory is reduced greatly because each sample only affects a few output words. For example, in a 20 tap filter with a frequency reduction of 8, each input sample is only used to calculate two or three output samples rather than twenty. Therefore, a running sum of $a_i Ax_i$ can be kept and it is not necessary that the input sample be stored. The input sample is multiplied by $a_i$ for sum no. 1, $a_i + 8$ for sum no. 2 and $a_i + 16$ for sum no. 3. When the summation has 20 values in it, it is output and that storage register is cleared. This multiplication can be accomplished by a fully parallel shift array or a tapped shift register.

A fully parallel shift using a parallel shifter and a parallel adder allows each multiply to require one clock period. A 20 tap filter with 32 kHz output requires an add rate of 640 kHz. If a 2 MHz system clock were available, this shifter and adder would be available for 1,360,000 more operations per second. A simple parallel structure using one bit adders and a 10 gate array requires 2 shift registers and one adder for each sum or 6 shift registers and 3 one bit adders total. A 16 bit word length would require a clock of 4 MHz (assuming 512 kHz sample rate).

The digital processing basically performs a low pass filter function to remove high frequency error components in the output of the A/D converter without attenuation of in-band signals. The output of the signal processor can be at a much lower sample rate than that of the converter if the high frequency components are removed. This "decimation" filter function is generally performed by FIR filters because the number of calculations can be reduced to just calculate output samples at the output sample rate. Although most systems use a simple averaging filter to average $N$, samples and reduce the frequency by a factor of N, the averaging filter technique does not provide adequate attenuation of out-of-band signals and more complex filters are needed which require some multiplications as well as additions and a hardware problem is presented. In accordance with the present invention the following describes techniques that use simple, low speed processing to perform the complex filtering operations.

The interpolative A/D converter illustrated in Figure 5 has a limited set of digital codes which are 0, $\pm 00000001$, $\pm 00000011$, $\pm 00000111$, $\pm 00001111$, $\pm 000111111$, $\pm 00111111$, $\pm 01111111$, and $\pm 11111111$ for a 17 level system. However, these codes are closely related and can be modified slightly to become very useful for special filter structures. The code modification involves modifying the DAC in the encoder so that the least significant bit (LSB) is doubled and equal to the second bit in value. If this is done, the actual outputs of the DAC would be equivalent to the codes 0, $\pm 000000010$, $\pm 000000100$, $\pm 000001000$, $\pm 000010000$, $\pm 000100000$, $\pm 001000000$, $\pm 010000000$, and $\pm 100000000$. The logic to convert the shift register codes to the new digital format is shown at 156 in Figure 17. This new code has the advantages that (a) each code has a single 1 in it (or a single 0) and (b) each code is exactly twice the lower code (except for the code above zero). These features can lead to several unique filter structures. Although filters are generally implemented with expensive multipliers and adders, this filter can be implemented with a simple serial adder, two shift registers and 8 AND gates as shown in Figure 17. The coefficient word consisting of 8 bits is loaded from ROM 152 into the shift register 154 and is effectively shifted N bits by the gate array which taps off one bit of the shift register dependent on the A/D output code. As the co-efficient is shifted through register 154, it is shifted by M places by the gate array 156 and is added to the previous summation stored in register 158. After M such operations the multiply and accumulation of that sample is complete (where M=8 bits plus the coefficient width (W) plus any overflow bits). If the registers are shorter than 8+W the results are truncated.

After n such accumulations, the output register 158 contains the result $y_o$. The register result is then output and the new sum is begun by disabling the feedback gate FG for the first accumulation of a new sample. This simple serial structure works well if the decimation filter has a frqeuency reduction ($F_{out}/F_{in}$)

13

equal to or greater than n. However, most general FIR frequency reduction filters have n greater than $F_{out}/F_{in}$ and each input sample must be part of several output samples.

An example is shown in Figure 18 where $F_{in} = 128$ kHz, $F_{out} = 16$ kHz and n=23. In this case, running sums must be kept where $S = nF_{out}/F_{in}$, or in this case, R=3. This system uses 16 bit shift registers clocked continuously at 2.048 MHz and each summation is completed out-of-phase with the others at a 48 kHz rate so that the total results are available at 16 kHz.

An alternative implementation of this filter structure can be built using a parallel adder and multiplexer/shift array. The multiplexer/shift array allows an input word to be shifted M places. If the input word is the appropriate coefficient and the shifter is controlled by the A/D converter, then the output of the shift array is equal to the product $a_i x_i$. The shifter output is added to the sum of the previous values of $a_i x_i$ until the required number of samples is summed. As with the serial adder approach, if n samples are used in the filter and the sample rate reduction ratio is $R(F_{sin}/F_{out})$, each input sample must be part of n/R summations. Thus, the example used for the serial approach can also apply to a parallel approach as shown in Figure 19. In this case, a parallel arithmetic logic unit (ALU) and shift array can be used for other arithmetic processing when not used for this filter. In this example, the processor must perform three shift and add operations which can be done in three clock cycles at a 256 kHz rate or a 760 kHz add rate. If the adder shift structure can operate at say 2.048 Mhz, only 37.5% of its capacity is used and it can perform many other mathematical operations.

The interpolative A/D converter output drives a shift array which is just an M input multiplexer. One bit of the array is illustrated at 156 in Figure 17 which shows that the array can easily be driven by the code with one in it. A standard multiplexer could be used if the A/D output is encoded. This can be done using a priority encoder which decodes the position of the single 1 and compresses the M bit code into a code which is $\log_2 M$ bits wide, i.e., a 9 to 15 bit code compresses into a four bit code. This compressed code can drive standard multiplexers.

Another type of filter can also be constructed by recognizing the fact that successive outputs of the A/D converter are related to each other. If the present code is known, the previous sample had to be one-half, twice or the inverse of the present code for a one comparator system. For a two comparator system an additional possible state of being equal to the present code exists. The only exception to this is the case around zero which can be eliminated by not allowing a 0 code in the A/D converter (0 is not necessary since it can be represented as an oscillation between equal, positive and negative codes).

Since there are only a limited number of possible changes (3 or 4), the previous state can be represented by a 2 bit code where $x_{n-1} = kX_n$ where k=.5, 2 or −1 (for a one comparator system). Since previous samples can be stored with only 2 bits, a series of samples can be stored or processed in a simple manner. Two possibilities are to use combinatorial logic or a ROM look-up.

The combinatorial circuit shown in Figure 20 is useful for small FIR filters, an example might be a two to one frequency reduction using a double zero filter of the form:

$$1/4(1 + 2\ Z^{-1} + Z^{-2})$$

Such a filter can be implemented combinatorially by recognizing that if the present sample is $X_n$, the previous sample $X_n-1$, is $k_1 X_n$ and two samples ago, $X_{n-2}$ the value was $k_1 k_2 X_n$. The summation is $(1 + 2k_1 + k_1 k_2)$. Since $k_1$ and $k_2$ are equal to .5, 2 or −1 (for one comparator interpolators) the summation has only 9 possible results of which one cannot exist. The final result can be calculated by using the present value and $k_1$ and $k_2$. The k values are generated by the logic that controls the shift register and are a two bit word where one bit indicates a sign change (if sign changes, the other bit is ignored) and the other bit indicates an increase ($\times 2$) or decrease ($\times .5$) of the shift register value. The combinatorial circuit requires little storage and is very fast but is limited to very simple filters. The sample value of zero creates problems because an additional k value is needed and k products are distorted. The A/D converter therefore does not use zero and represents zero by oscillating between +1 and −1 instead of +1, 0, −1. However, no performance degradation occurs.

This technique of using k values can be greatly expanded using a ROM. A general filter of the form

$$Y_0 = A_0 X_0 + A_1 X_1 + A_n X_n \tag{6}$$

can be rewritten as:

$$Y_0 = X_0[A_0 + K_1 A_1 + K_2 K_1 A_2 + \ldots (K_n K_{n-1} \ldots K_2 K_1) A_n] \tag{7}$$

The ROM can be addressed by the k values and can store the summations. The result is then shifted n places as determined by $X_0$.

An example of a 5 tap FIR is shown in Figure 21. The ROM has only 49 words since only 49 of the 81 combinations ($3^4$) are possible. The ROM however, does have 8 address lines in and a decoder to reduce the 256 states down to 49. Each word is a combination of

$$A_0 + K_1 A_1 + K_2 K_1 A_2 + K_3 K_2 K_1 A_3 + K_4 K_3 K_2 K_1 A_4.$$

# 0 054 024

For example, if

$$K_1 = 1/2; \quad K_2 = 2; \quad K_3 = 2; \quad \text{and} \quad K_4 + 1/2$$

then the word addressed has the value:

$$A_0 + 1/2 \ A_1 + A_2 + 2A_3 + A_4$$

For negative values of $X_0$ the resultant product is inverted (for use in 1's complement arithmetic) or inverted and 1 added (2's complement).

A future refinement of the system can be used for linear phase filters where the coefficients are symmetrical, i.e., $A_0 = A_n$, $A_1 = A_{n-1}$ and so on. The example in Figure 22 implements an 8-tap filter by summing two halves separately. This is done by storing two values of X, that is, $X_0$ and $X_{-8}$ such that

$$Y_0 = S0(A0 + K_1A_1 + K_2K_1A_2 + K_3K_2K_1A_3) + X_{-8}[A0 + (1/K_7)A_1 + (1/K_7K_6)A_2 + (1K_7K_6K_5)A3] \qquad (8)$$

The logic translator translates the values

$$(1/K_7), \ (1/K_7K_6) \ \text{and} \ (1/K_7K_6K_5)$$

into a format to use the same ROM as the first four coefficients. The ROM for this 8-tap system is kept to 27 words, the amount of storage is 6K values (12 bits) and 2X values (8 to 10 bits), and an adder is needed to sum the two partial results. However, only one add is needed to implement this filter.

## Claims

1. Subscriber line audio processing circuit apparatus comprising:
analog-to-digital converter means (16) coupled to a subscriber line for sampling an input audio signal at a first sampling frequency (512 kHz) and for developing a series of digital words representing the amplitude of each sample;
first signal processing means (18) for digitally filtering said series of digital words and for developing a first digitally processed signal having a second sampling frequency (8 kHz);
transmission means (20) for transmitting said first digitally processed signal to an external transmission line;
receiver means (22) for receiving a digital response signal at said second sampling frequency (8 kHz);
second signal processing means (24) coupled to said receiver means (22) for filtering said response signal and for developing a second digitally processed signal having a third frequency (256 kHz);
digital-to-analog converter means (26) for converting said second processed signal to analog form suitable for output to said subscriber line;
characterized in that
a) the first signal processing means (18) contain a main transmit filter (50) together with a first and a second lowpass decimation filter (40, 42), said first lowpass decimation filter (40) reducing the first sampling frequency of said digital words in one or more steps from said first sampling frequency (512 kHz) to a fourth sampling frequency (32 kHz), said second lowpass decimation filter (42) reducing the fourth sampling frequency (32 kHz) to a fifth sampling frequency (16 kHz); and the main transmit filter (50) reducing the fifth sampling frequency (16 kHz) to the second sampling frequency (8 kHz);
b) the second signal processing means (24) contain a first and a second lowpass interpolation filter (62, 64) together with a main receive filter (56) connected to said interpolation filters (62, 64) for filtering and increasing the sampling frequency of said digital response signal from said second sampling frequency (8 kHz) to the fifth sampling frequency (16 kHz), said first lowpass interpolation filter (62) filtering and increasing the second processed signal from said fifth sampling frequency (16 kHz) to said fourth sampling frequency (32 kHz), and said second lowpass interpolation filter (64) filtering and increasing the second processed signal in one or more steps from said fourth sampling frequency (32 kHz) to said third frequency (256 kHz), the output of said second filter (64) being connected to said digital-to-analog converter means (26) for developing a third digitally processed signal having said third sampling frequency (256 kHz), that
c) balance filter means (44) and impedance filter means (66) are provided to connect said first signal processing means (18) to said second signal processing means (24) to balance out the components of said third digitally processed signal, and to match the audio processing circuit to the input impedance of the subscriber line, respectively, and that
d) control interface means (32) are provided having an outgoing control bus (33) connected to said first and second signal processing means (18, 24) and to said balance and impedance filter means (44, 66) controlled from an external source.

2. Subscriber line audio processing circuit apparatus as recited in Claim 1, characterized in that said first signal processor (18) further includes first digitally controllable attenuation distortion correction filter

15

(46) and a first digitally controllable gain adjust means (48) both of which are connected to said interface means (32).

3. Subscriber line audio processing circuit apparatus as recited in Claim 1, characterized in that said second signal processing means (24) further includes a second gain adjust means (58) and second attenuation distortion correction filter means (60) both of which are digitally controllable via said control interface means (32).

4. Subscriber line audio processing circuit apparatus as recited in Claim 1, characterized in that further including test loop means (67) for enabling the output of said analog-to-digital converter means (16) to be selectively connected to the input of said digital-to-analog (26) converter means and for allowing the output of said low pass interpolator means (62, 64) to be selectively coupled into the input of said low pass decimator means (40, 42).

5. Subscriber line audio processing circuit apparatus as recited in Claim 1 characterized in that said low pass decimator means (40, 42) include finite impulse response filter means.

6. Subscriber line audio processing circuit apparatus as recited in Claim 1, characterized in that said low pass interpolator means (60, 62) include finite impulse response filter means.

7. Subscriber line audio processing circuit apparatus as recited in Claim 1, characterized in that said first signal processing means (18) includes transmit filter means (50) having a high pass filter section and a low pass filter section.

8. Subscriber line audio processing circuit apparatus as recited in Claim 1, characterized in that said means coupling said first and second signal processing means (18, 24) together includes a digitally controllable balance filter (44) connected to the output of said second attenuation distortion filter means (60) and to the input of said transmit attenuation distortion correction filter means (46).

9. Subscriber line audio processing circuit apparatus as recited in Claim 1, characterized in that said means coupling said first and second signal processing means (18, 24) together includes a digitally controllable inpedance filter means (66) connected to said low pass decimator means (40, 42) to said low pass interpolator means (62, 64).

10. Subscriber line audio processing circuit apparatus as recited in Claim 1, characterized in that said first low pass decimator filter (40) includes a multi-tap finite impulse response filter for reducing the sampling frequency of said first processed signal from said first sampling frequency (512 kHz) to a sixth sampling frequency (128 kHz), and two multi-tap finite impulse response filters for reducing the frequency of said first processed signal from said sixth sampling frequency (128 kHz) to a seventh (64 kHz), and to the fourth (32 kHz) sampling frequency, respectively, and that said second lowpass decimation filter (42) includes one multitap finite impulse response filter for reducing said fourth sampling frequency (32 kHz) to said fifth sampling frequency (16 kHz).

11. Subscriber line audio processing circuit apparatus as recited in Claim 1, characterized in that said main transmit filter (50) includes two infinite impulse response low pass filters of the canonical form and one infinite impulse response high-pass filter of the coupled form for filtering and reducing the sampling frequency of said first processed signal from said fifth sampling frequency (16 kHz) to said second sampling frequency (8 kHz).

12. Subscriber line audio processing circuit apparatus as recited in Claim 2, characterized-in that said first signal processing means includes a multi-tap finite impulse response attenuation distortion correction filter (46) and a one-tap finite impulse response gain adjust filter (48) both of which are digitally controllable and operate at said fifth sampling frequency (16 kHz).

13. Subscriber line audio processing circuit apparatus as recited in Claim 10, characterized in that said second signal processing means (24) further includes a main receive filter means (56) having two infinite impulse response low pass filters of the canonical form for filtering and increasing the sampling frequency (8 kHz) to a said fifth sampling frequency (16 kHz).

14. Subscriber line audio processing circuit apparatus as recited in Claim 13, characterized in that said first low pass interpolation filter (62) includes a multi-tap finite impulse response filter for filtering and increasing the sampling frequency of said second processed signal from said fifth sampling frequency (16 kHz) to said fourth sampling frequency (32 kHz), and that said second lowpass interpolation filter (64) includes three multi-tap finite impulse response filters for filtering and increasing the sampling frequency of said second processed signal from said fourth sampling frequency (32 kHz) to said seventh (64 kHz), sixth (128 kHz) and third (256 kHz) sampling frequency, respectively.

15. Subscriber line audio processing circuit apparatus as recited in Claim 14, characterized in that said second signal processing means (24) further includes a multi-tap finite impulse response attenuation distortion correction filter (60) and a one-tap finite impulse response gain adjust filter both of which are digitally controllable and operate at said seventh sampling frequency (16 kHz).

16. Subscriber line audio processing circuit apparatus as recited in Claim 10, characterized in that said means coupling said first and second signal processing means together includes:

a multi-tap finite impulse response balance filter means (44) connected to the output of said second attenuation distortion filter means (60) and to the input of said transmit attenuation distortion correction filter means (46) and

a multi-tap finite impulse response impedance filter means (66) connected to said low pass decimator means (40, 42) and to said low pass interpolator means (62, 64).

# 0 054 024

**Patentansprüche**

1. Teilnehmerleitungs-Tonverarbeitungs-Schaltungsvorrichtung umfassend:
eine Analog/Digital-Wandereinrichtung (16) die mit einer Teilnehmerleitung zum Abtasten eines Eingangsaudiosignales bei einer ersten Abtastfrequenz (512 kHz) und zum Entwickeln einer Serie von Digital-Worten, die die Amplitude jeder Abtastung repräsentieren, verbunden sind;
eine erste Signalsverarbeitungseinrichtung (18) zum digitalen Filtern der Serie von digitalen Worten und zur Erzeugung eines ersten digital verarbeiteten Signales mit einer zweiten Abtastfrequenz (8 kHz);
eine Übertragungseinrichtung (20) zur Übertragung des ersten digital verarbeiteten Signales auf eine externe Übertragungsleitung;
eine Empfanseinrichtung (22) zum Empfang eines digitalen Antwortsignales bei einer zweiten Abtastfrequenz (8 kHz);
eine zweite Signalverarbeitungseinrichtung (24), die mit der Empfangseinrichtung (22) zum Filtern des Antwortsignales und zum Hervorbringen eines zweiten digital verarbeiteten Signales verbunden ist, welches eine dritte Frequenz (256 kHz) aufweist,
eine Digital/Analog-Wandlereinrichtung (26) zur Umwandlung des zweiten verarbeiteten Signales in eine Analogform passend zur Abgabe an die Teilnehmerleitung, dadurch gekennzeichnet, daß
a) die erste Signalsverarbeitungseinrichtung (18) ein Hauptübertragungsfilter (50) enthält zusammen mit einem ersten und zweiten Tiefpaßdezimationsfilter (40, 42), wobei das erste Tiefpaßdezimationsfilter (40) die erste Abtastfrequenz der digitalen Worte in einem oder mehreren Schritten von der ersten Abtastfrequenz (512 kHz) auf eine vierte Abtastfrequenz (32 kHz) verringert, wobei das zweite Tiefpaßdezimationsfilter (42) die vierte Abtastfrequenz (32 kHz) auf eine fünfte Abtastfrequenz (16 kHz) verringert und das Hauptübertragungsfilter (50) die fünfte Abtastfrequenz (16 kHz) auf die zweite Abtastfrequenz (8 kHz) verringert;
b) die zweite Signalverarbeitungseinrichtung (24) ein erstes und zweites Tiefpaßinterpolationsfilter (62, 64) enthält zusammen mit einem Hauptempfangsfilter (56), das mit den Interpolationsfiltern (62, 64) zum Filtern und Vergrößern der Abtastfrequenz des ditialen Antwortsignales von der zweiten Abtastfrequenz (8 kHz) auf die fünfte Abtastfrequenz (16 kHz) verbunden ist, wobei das erste Tiefpaßinterpolationsfilter (62) das zweite verarbeitete Signal von der fünften Abtastfrequenz (16 kHz) auf die vierte Abtastfrequenz (32 kHz) filtert und vergrößert und wobei das zweite Tiefpaßinterpolationsfilter (64) das zweite verarbeitete Signal in einem oder mehreren Schritten von der vierten Abtastfrequenz (32 kHz) auf die dritte Frequenz (256 kHz) filtert und vergrößert, wobei der Ausgang des zweiten Filters (64) mit der Digital/Analog-Wandlereinrichtung (26) zur Hervorbringung eines dritten digital verarbeiteten Signales verbunden ist, welches die dritte Abtastfrequenz (256 kHz) aufweist,
c) eine Balanzfiltereinrichtung (44) und eine Impedanzfiltereinrichtung (66) vorgesehen sind, um die erste Signalverarbeitungseinrichtung (18) mit der zweiten signalverarbeitenden Einrichtung (24) zu verbinden, um so die Komponenten des dritten digital verarbeiteten Signales abzugleichen und um die Tonverarbeitungsschaltung an die Eingangsimpedanz der Teilnehmerleitung jeweils anzupassen, und
d) eine Steuerschnittstelleneinrichtung (32) vorgesehen ist, die einen abgehenden Steuerbus (33) aufweist, der mit der ersten und zweiten signalverarbeiteten Einrichtung (18, 24) verbunden ist, sowie mit der Balance- und Impedanzfiltereinrichtung (44, 66) die von einer externen Quelle gesteuert wird.

2. Teilnehmerleitungs-Tonverarbeitungs-Schaltungsvorrichtung nach Anspruch 1, dadurch gekennzeichnet, daß der erste Signalprozessor (18) außerdem ein erstes digital steuerbares Dämpfungsverzerrungs-Korrekurfilter (46) und eine erste digital steuerbare Verstärkungseinstelleinrichtung (48) umfaßt, von denen beide mit der Schnittstelleneinrichtung (32) verbunden sind.

3. Teilnehmerleitungs-Tonverarbeitungs-Schaltungsvorrichtung nach Anspruch 1, dadurch gekennzeichnet, daß die zweite Signalverarbeitungseinrichtung (24) außerdem eine zweite Verstärkungseinstellungseinrichtung (58) und eine zweite Dämpfungsverzerrungs-Korrekturfiltereinrichtung (60) aufweist, von denen beide digital steuerbar sind über die Steuerschnittstelleneinrichtung (32).

4. Teilnehmerleitungs-Tonverarbeitungs-Schaltungsvorrichtung nach Anspruch 1, dadurch gekennzeichnet, daß außerdem eine Test- oder Meßschleife (67) vorgesehen ist, um zu ermöglichen, daß der Ausgang der Analog/Digital-Wandlereinrichtung (16) selektiv mit dem Eingang der Digital/Analog-Wandlereinrichtung (26) verbunden wird, und um eine selektive Kopplung des Ausgangs der Tiefpaßinterpolationseinrichtung (62, 64) mit dem Eingang der Tiefpaßdezimatoreinrichtung (40, 42) zu gestatten.

5. Teilnehmerleitungs-Tonverarbeitungs-Schaltungsvorrichtung nach Anspruch 1, dadurch gekennzeichnet, daß die Tiefpaßdezimatoreinrichtung (40, 42) endliche impulsempfindliche Filtereinrichtungen aufweist.

6. Teilnehmerleitungs-Tonverarbeitungs-Schaltungsvorrichtung nach Anspruch 1, dadurch gekennzeichnet, daß die Tiefpaßinterpoltionseinrichtung (60, 62) endliche impulsempfindliche Filtereinrichtungen aufweist.

7. Teilnehmerleitungs-Tonverarbitungs-Schaltungsvorrichtung nach Anspruch 1, dadurch gekennzeichnet, daß die erste Signalverarbeitungseinrichtung (18) Übertragungsfiltereinrichtungen (50) aufweist, die einen Hochpaßfilterabschnitt und einen Tiefpaßfilterabschnitt aufweisen.

17

8. Teilnehmerleitungs-Tonverarbeitungs-Schaltungsvorrichtung nach Anspruch 1, dadurch gekennzeichnet, daß die Einrichtung, die die erste und zweite Signalverarbeitungseinrichtung (18, 24) miteinander koppelt, ein digital steuerbares Balancefilter (44) aufweist, welches mit dem Ausgang der zweiten Dämpfungsverzerrungs-Filtereinrichtung (60) und mit dem Eingang der Übertragungs-Dämpfungsverzerrungs-Korrekturfiltereinrichtung (46) verbunden ist.

9. Teilnehmerleitungs-Tonverarbeitungs-Schaltungsvorrichtung nach Anspruch 1, dadurch gekennzeichnet, daß die Einrichtung, die die erste und zweite Signalverarbeitungseinrichtung (18, 24) miteinander verbindet, eine digital steuerbare Impedanzfiltereinrichtung (66) aufweist, die mit der Tiefpaßdezimatoreinrichtung (40, 42) und mit der Tiefpaßinterpolationseinrichtung (62, 64) verbunden ist.

10. Teilnehmerleitungs-Tonverarbeitungs-Schaltungsvorrichtung nach Anspruch 1, dadurch gekennzeichnet, daß das erste Tiefpaßdezimatorfilter (40) ein Mehrfachabgrifffilter, das auf endliche Impulse anspricht, aufweist zum Reduzieren der Abtastfrequenz des ersten vararbeiteten Signales von der ersten Abtastfrequenz (512 kHz) auf eine sechste Abtastfrequenz (128 kHz) und zwei Mehrfachabgrifffilter, die auf endliche Impulse ansprechen, enthält zum Reduzieren der Frequenz des ersten verarbeiteten Signales von der sechsten Abtastfrequenz (128 kHz) jeweils auf eine siebte und auf eine vierte Abtastfrequenz (32 kHz) und daß das zweite Tiefpaßdezimierungsfilter (42) ein Mehrfachabgrifffilter, das auf endliche Impulse anspricht, umfaßt zum Reduzieren der vierten Abtastfrequenz (32 kHz) auf die fünfte Abtastfrequenz (16 kHz).

11. Teilnehmerleitungs-Tonverarbeitungs-Schaltungsvorrichtung nach Anspruch 1, dadurch gekennzeichnet, daß das Hauptübertragungsfilter (50) zwei auf unendliche Impulse ansprechende Tiefpaßfilter von kanonischer Form und ein auf unendlich Impulse ansprechendes Hochpaßfilter der gekoppelten Form aufweist, um die Abtastfrequenz des ersten verarbeiteten Signales zu filtern und von der ersten Abtastfrequenz (16 kHz) auf die zweite Abtastfrequenz (8 kHz) zu verringern.

12. Teilnehmerleitungs-Tonverarbeitungs-Schaltungsvorrichtung nach Anspruch 2, dadurch gekennzeichnet, daß die erste Signalverarbeitungseinrichtung ein Mehrfachabgriff-Dämpfungsverzerrungs-Korrekturfilter (46), ansprechend auf endliche Impulse und ein Einfachabgriff-Verstärkungseinstellfilter (48), ansprechend auf endliche Impulse aufweist, wobei beide digital steuerbar sind und bei der fünften Abtastfrequenz (16 kHz) arbeiten.

13. Teilnehmerleitungs-Tonverarbeitungs-Schaltungsvorrichtung nach Anspruch 10, dadurch gekennzeichnet, daß die zweite Signalverarbeitungseinrichtung (24) eine Hauptempfangsfiltereinrichtung (56) aufweist, welche zwei Tiefpaßfilter, ansprechend auf unendliche Impulse von kanonischer Form aufweist, um die Abtastfrequenz (8 kHz) auf die fünfte Abtastfrequenz (16 kHz) zu filtern und zu vergrößern.

14. Teilnehmerleitungs-Tonverarbeitungs-Schaltungsvorrichtung nach Anspruch 13, dadurch gekennzeichnet, daß das erste Tiefpaßinterpolationsfilter (62) ein Vieilfachabgrifffilter, ansprechend auf endliche Impulse zum Filtern und Vergrößern der Abtastfrequenz des zweiten verarbeiteten Signals von der fünften Abtastfrequenz (16 kHz) auf die vierte Abtastfrequenz (32 kHz) aufweist und daß das zweite Tiefpaßinterpolationsfilter (64) drei Vielfachabgrifffilter, ansprechend auf endliche Impulse zum Filtern und erhöhen der Abtastfrequenz des zweiten verarbeiteten Signals von der vierten Abtastfrequenz (32 kHz) jeweils auf die siebte (64 kHz) auf die sechste (128 kHz) und auf die dritte (256 kHz) Abtastfrequenz zu filtern und zu erhöhen.

15. Teilnehmerleitungs-Tonverarbeitungs-Schaltungsvorrichtung nach Anspruch 14, dadurch gekennzeichnet, daß die zweite Signalverarbeitungseinrichtung (24) ein Vielfachabgriff-Dämpfungsverzerrungs-Korrekturfilter (60), ansprechend auf endliche Impulse und ein Einfachabgriff-Verstärkungseinstellungsfilter, ansprechend auf endliche Impulse aufweist, wobei beide digital steuerbar sind und bei der siebten Abtastfrequenz (16 kHz) arbeiten.

16. Teilnehmerleitungs-Tonverarbeitungs-Schaltungsvorrichtung nach Anspruch 10, dadurch gekennzeichnet, daß die Einrichtung, welche die erste und zweite Signalverarbeitungseinrichtung miteinander kuppelt aufweist:

eine Vielfachabgriff-Balancefiltereinrichtung (44), ansprechend auf endliche Impulse, die mit dem Ausgang der zweiten Dämpfungsverzerrungs-Filtereinrichtung (60) und mit dem Eingang der Übertragungsdämpfungsverzerrungs-Korrekturfiltereinrichtung (46) verbunden ist und

eine Vielfachabgriff-Impedanzfiltereinrichtung (66), ansprechend auf endliche Impulse, die mit der Tiefpaßdezimatoreinrichtung (40, 42) und mit der Tiefpaßinterpolationseinrichtung (62, 64) verbunden ist.

**Revendications**

1. Circuit de traitement audio de ligne d'abonné comprenant:

des moyens convertisseurs analogique-numérique (16) connectés à une ligne d'abonné pour échantillonner un signal audio d'entrée à une première fréquence d'échantillonnage (512 kHz) et pour produire une série de mots numériques représentant l'amplitude de chaque échantillon;

des premiers moyens de traitement de signal (18) destinés à effectuer un filtrage numérique de la série de mots numériques et à produire un premier signal traité de façon numérique ayant une seconde fréquence d'échantillonnage (8 kHz);

des moyens d'émission (20) destinés à émettre vers une ligne de transmission externe le premier signal traité de façon numérique;

des moyens récepteurs (22) destinés à recevoir un signal de réponse numérique à la seconde fréquence d'échantillonnage (8 kHz);

des seconds moyens de traitement (24) connectés aux moyens récepteurs (22) pour filtrer le signal de réponse et pour produire un second signal traité de façon numérique ayant une troisième fréquence (256 kHz); des moyens convertisseurs numérique-analogique (26) destinés à convertir le second signal traité en une forme analogique qui convient pour la sortie vers la ligne d'abonné;

caractérisé en ce que

a) les premiers moyens de traitement de signal (18) comportent un filtre d'émission principal (50) ainsi que des premier et second filtres de décimation passe-bas (40, 42), le premier filtre de décimation passe-bas (40) réduisant la première fréquence d'échantillonnage des mots numériques, en une ou plusieurs étapes, de la première fréquence d'échantillonnage (512 kHz) à une quatrième fréquence d'échantillonnage (32 kHz), le second filtre de décimation passe-bas (42) réduisant la quatrième fréquence d'échantillonnage (32 kHz) à une cinquième fréquence d'échantillonnage (16 kHz); et le filtre d'émission principal (50) réduisant la cinquième fréquence d'échantillonnage (16 kHz) à la seconde fréquence d'échantillonnage (8 kHz);

b) les seconds moyens de traitement de signal (24) contiennent des premier et second filtres d'interpolation passe-bas (62, 64) ainsi qu'un filtre de réception principal (56) connecté aux filtres d'interpolation (62, 64) pour filtrer et augmenter la fréquence d'échantillonnage du signal de réponse numérique, pour la faire passer de la seconde fréquence d'échantillonnage (8 kHz) à la cinquième fréquence d'échantillonnage (16 kHz), le premier filtre d'interpolation passe-bas (62) filtrant et augmentant la fréquence du second signal traité de la cinquième fréquence d'échantillonnage (16 kHz) à la quatrième fréquence d'échantillonnage (32 kHz) et le second filtre d'interpolation passe-bas (64) filtrant et augmentant la fréquence du second signal traité, en une ou plusieurs étapes, de la quatrième fréquence d'échantillonnage (32 kHz) à la troisième fréquence d'échantillonnage (256 kHz), la sortie du second filtre (64) étant connectée aux moyens convertisseurs numérique-analogique (26) pour produire un troisième signal traité de façon numérique ayant la troisième fréquence d'échantillonnage (256 kHz), en ce que

c) un filtre d'équilibrage (44) et un filtre d'adaptation d'impédance (66) sont prévus pour connecter les premiers moyens de traitement de signal numérique (18) aux seconds moyens de traitement de signal numérique (24), pour équilibrer les composantes du troisième signal traité de façon numérique, et pour adapter le circuit de traitement audio à l'impédance d'entrée de la ligne d'abonné, respectivement, et en ce que

d) il existe des moyens d'interface de commande (32) qui comportent un bus de commande de sortie (33) connecté aux premiers et seconds moyens de traitement de signal (18, 24) et aux filtres d'équilibrage et d'adaptation d'impédance (44, 66) et qui sont commandés à partir d'une source externe.

2. Circuit de traitement audio de ligne d'abonné selon la revendication 1, caractérisé en ce que les premiers moyens de traitement de signal (18) comportent en outre un premier filtre de correction de distorsion d'atténuation (46) pouvant être commandé de façon numérique, et des premiers moyens de réglage de gain (48) pouvant être commandés de façon numérique, et tous deux sont connectés aux moyens d'interface (32).

3. Circuit de traitement audio de ligne d'abonné selon la revendication 1, caractérisé en ce que les seconds moyens de traitement de signal (24) comprennent en outre des seconds moyens de réglage de gain (58) et un second filtre de correction de distortion d'atténuation (60), tous deux pouvant être commandés de façon numérique par l'intermédiaire des moyens d'interface de commande (32).

4. Circuit de traitement audio de ligne d'abonné selon la revendication 1, caractérisé en ce qu'il comprend en outre des moyens d'établissement de boucle de test (67) destinés à permettre de connecter sélectivement la sortie des moyens convertisseurs analogique-numérique (16) à l'entrée des moyens convertisseurs numérique-analogique (26), et à permettre de connecter sélectivement la sortie des moyens interpolateurs passe-bas (62, 64) à l'entrée des moyens de décimation passe-bas (40, 42).

5. Circuit de traitement audio de ligne d'abonné selon la revendication 1, caractérisé en ce que les moyens de décimation passe-bas (40, 42) comprennent des filtres à réponse impulsionnelle finie.

6. Circuit de traitement audio de ligne d'abonné selon la revendication 1, caractérisé en ce que les moyens interpolateurs passe-bas (60, 62) comprennent des filtres à réponse impulsionnelle finie.

7. Circuit de traitement audio de ligne d'abonné selon la revendication 1, caractérisé en ce que les premiers moyens de traitement de signal (18) comprennent un filtre d'émission (50) qui comporte une second de filtre passe-haut et une section de filtre passe-bas.

8. Circuit de traitement audio de ligne d'abonné selon la revendication 1, caractérisé en ce que les moyens qui connectent ensemble les premiers et seconds moyens de traitement de signal (18, 24) comprennent un filtre d'équilibrage (44) pouvant être commandé de façon numérique qui est connecté à la sortie du second filtre de correction de distortion d'atténuation (60) et à l'entrée du filtre de correction de distortion d'atténuation d'émission (46).

9. Circuit de traitement audio de ligne d'abonné selon la revendication 1, caractérisé en ce que les moyens qui connectent ensemble les premiers et seconds moyens de traitement de signal (18, 24) comprennent un filtre d'adaptation d'impédance (66) pouvant être commandé de façon numérique, qui est connecté aux moyens de décimation passe-bas (40, 42) et aux moyens interpolateurs passe-bas (62, 64).

10. Circuit de traitement audio de ligne d'abonné selon la revendication 1, caractérisé en ce que le

**0 054 024**

premier filtre de décimation passe-bas (40) comprend un filtre à réponse impulsionnelle finie et à prises multiples, destiné à réduire la fréquence d'échantillonnage du premier signal traité, de la première fréquence d'échantillonnage (512 kHz) à une sixième fréquence d'échantillonnage (128 kHz), et deux filtres à réponse impulsionnelle finie et à prises multiples, destinés à réduire la fréquence du premier signal traité, de la sixième fréquence d'échantillonnage (128 kHz), respectivement à une septième fréquence d'échantillonnage (64 kHz) et à la quatrième fréquence d'échantillonnage (32 kHz), et en ce que le second filtre de décimation passe-bas (42) comprend un filtre à réponse impulsionnelle finie et à prises multiples, destiné à réduire la quatrième fréquence d'échantillonnage (32 kHz) à la cinquième fréquence d'échantillonnage (16 kHz).

11. Circuit de traitement audio de ligne d'abonné selon la revendication 1, caractérisé en ce que le filtre d'émission principal (50) comprend deux filtres passe-bas à réponse impulsionnelle infinie de forme canonique, et un filtre passe-haut à réponse impulsionnelle infinie, de forme couplée, pour filtrer et réduire la fréquence d'échantillonnage du premier signal traité, pour la faire passer de la cinquième fréquence d'échantillonnage (16 kHz) à la seconde fréquence d'échantillonnage (8 kHz).

12. Circuit de traitement audio de ligne d'abonné selon la revendication 2, caractérisé en ce que les premiers moyens de traitement de signal comprennent un filtre de correction de distorsion d'atténuation à réponse impulsionnelle finie et à prises multiples (46), et un filtre de réglage de gain à réponse impulsionnelle finie et à une prise (48), tous deux pouvant être commandés de façon numérique et fonctionnant à la cinquième fréquence d'échantillonnage (16 kHz).

13. Circuit de traitement audio de ligne d'abonné selon la revendication 10, caractérisé en ce que les seconds moyens de traitement de signal (24) comprennent en outre un filtre de réception principal (56) ayant deux filtres passe-bas à réponse impulsionnelle infinie, de forme canonique, pour filtrer et augmenter la fréquence d'échantillonnage (8 kHz), pour la faire passer à la cinquième fréquence d'échantillonnage (16 kHz).

14. Circuit de traitement audio de ligne d'abonné selon la revendication 13, caractérisé en ce que le premier filtre d'interpolation passe-bas (62) comprend un filtre à réponse impulsionnelle finie et à prises multiples, destiné à filtrer et à augmenter la fréquence d'échantillonnage du second signal traité, pour la faire passer de la cinquième fréquence d'échantillonnage (16 kHz) à la quatrième fréquence d'échantillonnage (32 kHz), et en ce que le second filtre d'interpolation passe-bas (64) comprend trois filtres à réponse impulsionnelle finie et à prises multiples, destinés à filtrer et à augmenter la fréquence d'échantillonnage du second signal traité, pour la faire passer respectivement de la quatrième fréquence d'échantillonnage (32 kHz) aux septième (64 kHz), sixième (128 kHz) et troisième (256 kHz) fréquences d'échantillonnage.

15. Circuit de traitement audio de ligne d'abonné selon la revendication 14, caractérisé en ce que les seconds moyens de traitement de signal (24) comprennent en outre un filtre de correction de distorsion d'atténuation à réponse impulsionnelle finie et à prises multiples (60) et un filtre de réglage de gain à réponse impulsionelle finie et à une prise, tous deux pouvant être commandés façon numérique et fonctionnant à la septième fréquence d'échantillonnage (16 kHz).

16. Circuit de traitement audio de ligne d'abonné selon la revendication 10, caractérisé en ce que les moyens destinés à connecter ensemble les premiers et seconds moyens de traitement de signal comprennent:

un filtre d'équilibrage à réponse impulsionnelle finie et à prises multiples (44) connecté à la sortie du second filtre de correction de distorsion d'atténuation (60) et à l'entrée du filtre de correction de distorsion d'atténuation d'émission (46) et

un filtre d'adaptation d'impédance à réponse impulsionnelle finie et à prises multiples (66) qui est connecté aux moyens de décimation passe-bas (40, 42) et aux moyens interpolateurs passe-bas (62, 64).

20

Fig_1A

0 054 024

Fig_1B

0 054 024

Fig_2

FIR

Fig_3

IIR
(CANONICAL
FORM)

Fig_4

IIR
(COUPLED
FORM)

# 0 054 024

*Fig_5*

PRIOR ART

$$V_{n+1} = \frac{2}{3}\left(2^{n+1}\right) - 1$$

$$V_{in} = V_n = \frac{2}{3}\left(2^{n}\right) - 1$$

$$V_{n-1} = \frac{2}{3}\left(2^{n-1}\right) - 1$$

*Fig_6A* 3 LEVEL INTERPOLATION AT $F_S$

$$V_n = 2^{n+1}$$

$$V_{in} = \frac{2}{3}\left(2^{n}\right) - 1$$

$$V_n = 2^{n}$$

*Fig_6B* 2 LEVEL INTERPOLATION AT $F_S/2$

4

Fig_7A    250 Hz SIGNAL

Fig_7B    4 kHz SIGNAL

Fig_11    4 kHz SIGNAL WITH ADAPTION

*Fig_8*

*Fig_9*

Fig_10

Fig_12

Fig_14

Fig_13

# 0 054 024

TO ENCODER DAC

**BIDIRECTIONAL SHIFT REGISTER**

**COUNTER** /124 — CLK AT $F_s$

A /120

**ARITHMETIC PROCESSOR** B

**COEFFICIENT ROM** /122

A x B

126

**ADDER AND ACCUMULATOR**

$$Y_0 = \frac{1}{256} \sum_{i=0}^{i=22} a_i \times_i$$

**OUTPUT REGISTER**

*Fig_15*

**10 BIT BI-DIR. S.R.**

10 MSBs

**15 BIT S.R. 5LSBs**

$A_4$ $A_3$ $A_2$ $A_1$ $A_0$

**16 BIT S.R. ACC. A**

10 MSBs

**15 BIT S.R. 5LSBs**

$B_4$ $B_3$ $B_2$ $B_1$ $B_0$

**16 BIT S.R. ACC. B**

**3:1 MUX** — SERIAL OUTPUT

**15 BIT S.R. 5LSBs**

$C_4$ $C_3$ $C_2$ $C_1$ $C_0$

**16 BIT S.R. ACC. C**

**COUNTER** /5

$A_0$-$A_4$  5
$B_0$-$B_4$  5
$C_0$-$C_4$  5

**COEFFICIENT ROM**

*Fig_16*

9

Fig_17

Fig_18

0 054 024

Fig_19

Fig_20

Fig_21

Fig_22